(19) Europäisches Patentamt
European Patent Office
Office européen des brevets

(11) EP 1 139 605 A1

(12) EUROPEAN PATENT APPLICATION

(43) Date of publication:
04.10.2001 Bulletin 2001/40

(51) Int Cl.$^7$: **H04L 12/28**, H04L 12/56

(21) Application number: 00106924.4

(22) Date of filing: 31.03.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **Telefonaktiebolaget L M Ericsson (Publ)**
**126 25 Stockholm (SE)**

(72) Inventors:
- **Schieder, Andreas**
  **52134 Herzogenrath (DE)**
- **Ley, Tobias**
  **52072 Aachen (DE)**

(74) Representative: **HOFFMANN - EITLE**
**Patent- und Rechtsanwälte**
**Arabellastrasse 4**
**81925 München (DE)**

# (54) Network controller and communication packet data transfer with reduced delay

(57) In a communication system (SYS) in which a packet data transfer is performed between a network side (NS) and a subscriber terminal side (SS) a physical connection (PC) is maintained during the data packet transfer. In association with each transferred data packet (DP) a transmitter queue length information (CV) is transmitted to a network controller (NC) on the network side (NS). On the basis of the received length information (CV) a network side transmission resources controller (SCH-RES) determines transmission resources (TS) for the data packet transfer on the uplink connection (UL) in the next uplink frame such that at least one data packet (DP) remains in the subscriber terminal side transmitter buffer queue (TR-QUE) during an active period of the application. Since at least one data packet is always present in the transmitter queue (TR-QUE) unnecessary physical connection releases can be avoided. In addition to adjusting the transmission resources on the basis of the received length information, the controller (SHC-RES) can also estimate the arrival rate of data packets in the transmitter queue (TR-QUE) and can make the assignment of resources dependent on the determined arrival rate (AR). The invention finds particular application in the GPRS/(E)GPRS/GSM environment.

*FIG.6*
PRINCIPLE OF THE INVENTION

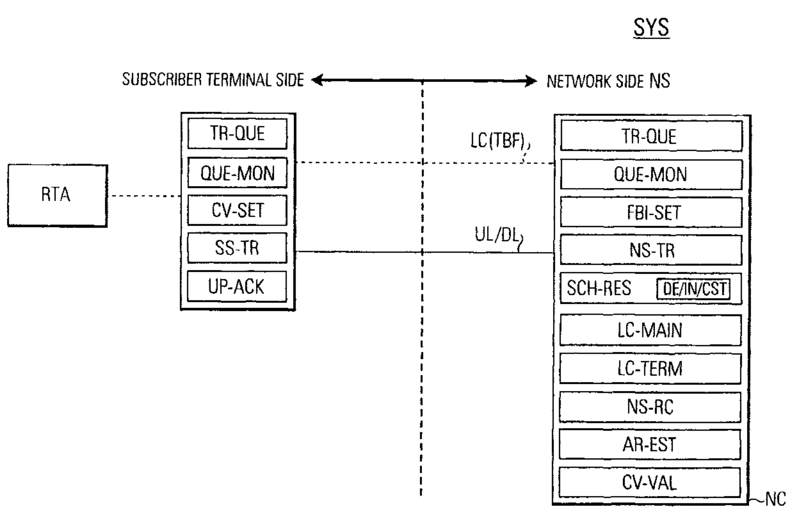


EP 1 139 605 A1

## Description

### FIELD OF THE INVENTION

The invention relates to a network controller and a communication system for performing a packet data transfer on a connection between a subscriber terminal side and a network side. The communication system can comprise a packet data communication system only or a packet data communication system connected to a circuit switched communication system.

In such a communication system a physical connection is maintained during a data packet transfer which in principle indicates in the subscriber terminal side and in the network side that the subscriber terminal and the network side are valid for performing a packet data transfer. A data packet transfer can only be performed if the physical connection is established.

The present invention in particular addresses the problem to avoid empty transmitter queues in the subscriber terminal side in order to keep the physical connection alive during active periods of real-time applications and thus minimizing the transmission delay.

### BACKGROUND OF THE INVENTION

Although the invention is of course not limited to any particular type of communication system comprising a packet data communication network or a circuit switched communication network and a packet switched communication network in combination, the background of the invention can most easily be understood by reference to the GPRS (General Packet Radio Service) system in GSM (Global System for Mobile Communication). GPRS is a new packet switched service which is standardized by ETSI.

As shown in Fig. 1, a communication system SYS incorporating a GPRS network architecture comprises for the conventional circuit switched mobile communication network the well-known entities of e.g. a mobile switching centre MSC, a base transceiver station BTS, a base station controller BSC, a home location register HLR etc. wherein the mobile switching centre MSC may be connected to a conventional public switched telephone network PSTN.

The GPRS architecture (illustrated with grey shading) introduces new packet switching functionalities in the existing GSM architecture. According to the GSM specifications a new node SGSN (Serving GPRS Support Node) is provided which is interfaced via interfaces Gb, Gs, Gr with the base station controller BSC, the mobile switching centre MSC and the home location register HLR. Via the SGSN node an IP backbone network can be accessible in the conventional mobile communication network. By means of additional nodes GGSN (Gateway GPRS Support node) an IP network or X.25 network can for example be connected to the IP backbone network.

In Fig. 1 the dotted lines denote an exchange of signalling messages, the dashed lines denote a circuit switched connection and the solid lines denote a packet switched connection.

The existing GSM data services (9.6 k-bit/s packet switched) and a newly standardized High Speech Circuit Switched Data HSCSD and GPRS with data rates up to 114 k-bit/s are based on a Gaussian Minimum Shift Keying (GMSK) Modulation Scheme. To be able to have even higher bit rates a 8-Phase Shift-Keying (PSK) modulation scheme is introduced with an advanced standard, called the EDGE standard, which can boost the available data rate up to 384 k-bit/s (EDGE: enhanced Data Rate for GSM Evolution). A new extension called EGPRS (Enhanced General Packet Radio System) is considered as the migration from the second generation mobile network to the third generation Wideband Code Division Multiplex Access (WCDMA) networks. As shown in Fig. 1, GPRS provides a packet switched transmission service to transport data in a mobile environment. This packet oriented data service for GSM supports protocols like X.25 and IP as level 3 protocols and therefore is suitable to work as air link for the access to the IP based Internet. Another advantage in respect of Internet application in the mobile communication network via GPRS is that a packet oriented service no longer needs a costly online connection applying time based charging but enables volume based charging.

In the system in Fig. 1 the aim is that the communication system SYS shall be able to support all existing applications via packet switched links, including voice and video but should also support application with bursty traffic, such as Internet applications whose bursty nature requires efficient multiplexing on the GSM time slot (TS). The idea is to build a unified network based on IP providing service flexibility and independence of applications and the network.

In particular due to the time critical nature of speech transmission it is important to meet the tight quality of service requirements of real time traffic. For example, in real time applications as VoIP (Voice over Internet Protocol) over GPRS and EGPRS, the end-to-end delay time of the transfer of data packets is an important aspect, since for example a high delay time might sound like a speech pause at the receiving end. Therefore, in particular for real time applications special provisions regarding the maximum delay time must be made.

**Protocol structure**

In Fig. 2 the GPRS protocol structure for the communication network SYS in Fig. 1 is shown. MS is the protocol stack of the mobile station or subscriber terminal, more generally of a communication station. BSS is the base station system and SGSN and GGSN are the same nodes as explained above with reference to Fig. 1. It should be noted that a full description of this protocol structure is contained in the ETSI standard GSM 3.60 and hereinafter only those portions of the protocol structure are explained which are relevant for the present invention.

As shown in Fig. 2 the medium access layer MAC and the radio link layer RLC operate above the physical link layer. The MAC layer provides the multiplexing of several mobile stations MS on the time slot structure of GSM. The MAC layer arbitrates multiple mobile stations attempting to allocate resources and transmitting simultaneously. The operations of the MAC functions allow a single mobile station to use more than one time slot (TS) simultaneously. The number of allowed parallely used time slots TS in a single TDMA frame is determined by the time slot capabilities of the mobile station. Hereinafter, these capabilities are called "multislot capability". Each mobile station is thus given a certain amount of time slots TS for use, ranging from multislot capability 1 (only 1 time slot TS) up to multislot capability 8 (all 8 time slots TS in the TDMA frame).

The GRPRS MAC layer is responsible for providing efficient multiplexing of data and control signalling on the uplink and downlink connections. The multiplexing on the downlink is controlled by a so-called downlink scheduler which has knowledge of the active mobile stations in the system and of the downlink traffic. Therefore, an efficient multiplexing on the timeslots TS can be made. On the uplink, the multiplexing is controlled by medium allocation to individual users. This is done by resource requests, which are sent by the mobile station to the network which then has to schedule the time slot TS on the uplink.

The GPRS RLC function provides the interface towards the LLC (LLC: Logical Link Control) layer, especially the segmentation and re-assembly of LLC-PDUs (PDU: Packet Data Units) into RLC data blocks depending on the used coding scheme (CS).

The procedures of the medium access layer MAC in the mobile station (communication station) on the terminal side and the base station system BSS on the network side NS include the provision of a physical connection which is called the Temporary Block Flow TBF in GPRS. A temporary Block Flow (TBF) is a physical connection used by the two RR peer entities to support the unidirectional transfer of LLC packet data units (PDUs) on packet data physical channels. The TBF is allocated radio resources on one or more packet data channels PDCHs and comprises a number of RLC/MAC blocks carrying one or more LLC PDUs. A TBF is temporary and is maintained only for the duration of the data transfer (i.e. until there are no more RLC/MAC blocks to be transmitted and in RLC acknowledgement mode, all of the transmitted RLC/MAC blocks have been successfully acknowledged by the receiving entity). The physical connection TBF is assigned a temporary flow identifier (TFI) by the network side NS to associate the mobile station MS with the current physical connection TBF.

For example, an uplink state flag (USF) is used by the network side NS (i.e. the network scheduler) to control the multiplexing of the different mobile stations on the uplink connection (for the packet transfer). The uplink state flag USF is included in the header of each RLC PDU packet on the downlink connection (Packet Data Channel PDCH). The uplink state flag USF indicates the owner of the corresponding uplink data packet (radio block). The mobile station MS which has the identity indicated in the USF field is allowed to transmit a RLC block (data packet) in the uplink direction on the corresponding time slot TS.

Thus, the physical connection is used to organize the access of the radio resources. A mobile station MS having a valid TBF is therefore included in the GPRS scheduling mechanism and can expect to get access to the radio resources according to its signalled multislot capabilities. Thus, the physical connection indicates in the subscriber terminal (mobile station) and in the network side (base station system BSS) that the subscriber terminal and the network side are valid for performing a packet data transfer. Via this physical connection the subscriber terminal side and the network side know that the subscriber terminal (mobile station or communication station) should be included in the GPRS timeslot (radio resources) scheduling. Thus, via the physical connection a context is generated in the subscriber terminal side and the network side which indicates the subscriber terminal and network side as being included in the packet data communication system radio resources scheduling process. This context or physical connection is only maintained during the data packet transfer and is terminated as soon as a packet data transfer stops.

**Real time application (voice coder)**

There are applications like real-time applications, which are sensitive against delays occurring during the end-to-end data packet transfer. In particular, this applies to voice coding (a real time application), without being limited to it.

With increasing processing power it became beneficial to compress voice/audio information before sending it to the subscriber terminal or the network side. This is especially true for transmission of speech/audio over wireless channels because transmission costs are much higher than computing costs in this environment. Nowadays, many different coders have been employed and are in use. Most of these coders generate a constant bit rate traffic (CBR) and produce data packets at typical and well defined regular intervals. The coder standard ITU-T G.723.1 may serve as a typical example of these coders. Data packets containing compressed speech information are produced with inter-arrival times TDIFF of 30 ms and the data packets are typically 24 bytes in size.

A coder on the transmitting subscriber terminal side SS or the network side NS may use a silence detector to avoid generating packets during speech pauses. When the silence detector detects a silence period it sends a silence insertion descriptor SID as shown in Fig. 4b in order to indicate the silence period. In the silence period no data packets are generated. The silence insertion descriptor SID is also used to define the comfort noise level generated at the receiver site during the silence period. Fig. 4b shows a typical packet stream produced by such a coder according to G.723.1.

Of course, it depends on the coding standard used whether or not a silence insertion descriptor SID is sent by the coder. That is, other coders may prefer not to insert a silence insertion descriptor in which case the silence periods are indicated to the receiver site differently, or not at all.

In principle, the typical traffic shape shown in Fig. 4b can be generated by a coder or any real time application RTA connected or incorporated into the mobile station as shown in Fig. 3.

## Transmission queue TR-QUE

The data packets as generated in Fig. 4a by a real time coder for speech (or in fact by any other application connected to or incorporated into the mobile station MS) is transmitted by the subscriber terminal side or the network side from a transmission buffer containing a transmission queue TR-QUE illustrated in Fig. 3. As shown in Fig. 4a, the data packets DP1, DP2, DP3...DPn are successively transmitted to the network side or subscriber terminal side from this transmitter queue TR-QUE. However, when transmitting encoded speech data packets/audio data packets over GPRS/EGPRS there is a certain threat that the systems behaves poorly due to the frequent and unnecessary releases of the physical connection TBF, even during active periods of a speaker. The inventors have discovered such a problem during their studies of experimental and simulative systems.

A reason for the frequent release of the physical connection TBF is the behaviour of GPRS focussing on a transmission of large application packet data units PDUs such as complete web-pages or simply the content of a TCP window (TCP: Transfer Control Protocol). For such applications which quickly and continuously generate data packets, the transmitter queue TR-QUE is likely to be filled and the individual data packets are successively transmitted whilst the physical connection TBF is not interrupted. In contrast to that, in the case of audio/speech transmission over (E) GPRS the transmitter queue TR-QUE is still constantly filled with small data packets from the application (the speech coder). For the case of the G.723.1 standard speech coder, an application packet enters the (E)GPRS transmitter queue TR-QUE every 30 ms. That is, for such a coder the inter-arrival time is typically 30ms.

However, if the packet is transmitted from the queue in a shorter time than 30ms, the transmitter queue TR-QUE is emptied (as illustrated in Fig. 4a and Fig. 4c) and in such a case the GPRS physical connection release procedures as shown in Fig. 5 are immediately started. This leads especially for high-end terminals (high multislot capability) to the unwanted effect of frequent physical connection releases and establishments. In such a case the application and end-user would experience an unnecessary high end-to-end delay and furthermore, of course the repeated release and establishment of the physical connection TBF entails a heavy signalling load during the TBF handling.

Since unnecessary TBF releases have been recognized as the core problem of the current GPRS, hereinafter with reference to Fig. 5 and Fig. 4c the procedure for uplink TBF release will be explained with more detail. It should also be noted that of course these release and establishment procedures for a physical connection are by no means limited to the real time application data packet patterns since a TBF release will start whenever an empty queue in the transmitter is detected, independent from the fact whether the data packets are generated by a real time application or any other application.

## Physical connection release

As explained above, the establishment of physical connection TBF is done by using the signalling channels of GPRS. This means that a demand for a physical connection TBF needs to be signalled in the worst case on the random access channel. In general, the establishment of a physical connection TBF takes a certain time and occupies a signalling capacity in the communication system. The GPRS standard does not define exactly the conditions when a physical connection TBF has to be established and released. However, the method to perform the establishment and release procedures have been defined quite clearly.

Thus, with reference to Fig. 5 and Fig. 3 the release procedure for an uplink physical connection TBF is described. The subscriber terminal side comprises a subscriber terminal side transmitter queue monitoring device QUE-MON for determining whether the transmitter queue TR-QUE comprises data packets DP to be transmitted (see Fig. 4a). Furthermore, the subscriber terminal side comprises a transmitter queue information setting means CV-SET for determining on the basis of the determination made by the transmitter queue monitoring means QUE-MON a transmitter queue information CV indicating whether the transmitter queue is empty (CV=0) or whether the transmitter queue TR-QUE contains at least one remaining data packet to be transmitted to the network side (CV>0). The subscriber terminal side transmitter SS-TR transmits to the network side NS data packets DP from the transmitter queue TR-QUE and transmits in association with the respective data packet DP the determined transmitter queue information CV. The transmitter queue information CV can be transmitted in the respective packet DP as shown in Fig. 5 and Fig. 4c. However, it is of course sufficient to link the transmission of the data packet to the transmission of the respective transmitter queue information CV. Thus, every RLC/MAC data block sent from the subscriber terminal side to the network side contains the transmitter queue information CV (which hereinafter will also be referred to as the counter value CV field). Usually this counter value CV field is transmitted in the header and is used to signal the number of remaining RLC packets in the transmitter queue TR-QUE. Fig. 4c shows one example of the usage of the counter value CV field for a mobile station handling 2 time slots in a TDMA frame. As can be seen from Fig. 4c, for each transferred data packet a respective counter value field CV is determined, i.e. in Fig. 4c CV=2 for the first data packet (PDU) and CV=1 for the second packet (PDU)).

According to the ETSI GSM 04.60 V8.2.0 standard the transmitter terminal side transmitter queue information setting means CV-SET sets as said transmitter queue information CV a counter value CV determined in accordance with the following expression:

$$\text{Integer } x = \text{roundup}((TBC-BSN'-1)/NTS)$$

$$CV = x, \text{ if } x <= BS_CV_MAX$$

$$15, \text{ otherwise}$$

where:

| | |
|---|---|
| CV: | counter value inserted in each data packet DP before transmission; |
| TBC: | total number of data packets DP present in the transmitter queue TR-QUE; |
| NTS: | transmission resources RES defined as a number of time slots (multislot capability NTS) in a single frame used for data packets DP transferred on the uplink connection with range 1 to 8; |
| BSN': | absolute block sequence number of the RLC data block with range from 0 to (TBC-1); |
| BS_CV_MAX: | a parameter broadcast in the system information; and |
| roundup: | rounds upwards to the nearest integer. |

According to the standard, once a mobile station MS transmits a value of CV other than 15, the mobile station shall transmit exactly (TBC-BSN'-1) not transmitted RLC data blocks. In other words, a countdown procedure is started, which leads to the release of the physical connection TBF. In particular, in context with real-time applications, this can cause an unnecessary release of the physical connection TBF and therefore can introduce an unnecessary delay. Any data that arrives from the higher layer after the commencement of the countdown process shall be sent within a future physical countdown TBF.

Also without focusing on the countdown procedure, the normal resource assignment results in an unnecessary physical connection TBF release as shown in Fig. 4c. The transmitter queue information setting means CV-SET always determines at a certain time the number of data packets which remain when the present data packet is transmitted to the network side. Since for example in step ST4cl the network side transmission resource scheduler SCH-RES had assigned two time slots 2TS (because the mobile station is a multislot capability 2 mobile station) the first data packet transferred in step ST4c2 receives a counter value CV = 2 (CV = roundup [(4-1)/2] = roundup [1.5] = 2). Likewise, the second data packet receives a counter value of CV = 1 (CV = roundup [(3-1)/2] = roundup [1.0] = 1. The assignment of two timeslots and the transmission of data slots with the respectively calculated counter value CV is continued in Fig. 4c in steps ST4c3, ST4c4, ST4c5 and ST4c6. In Fig. 4c a multislot capability 2 mobile station and an application generating a new data packet every 30ms was assumed. However, also for the general case the calculation of the counter value CV and the transmission of the data packets is the same. That is, in a multislot capability x transmission maximum x timeslots are used for transmission as assigned beforehand by the network side NS and each of the x data packets have a corresponding counter value CV.

Furthermore, it should be noted that of course the transmission of the data packets by using timeslots can also be different. For example, each data packet can be distributed over the plurality of timeslots and can be reassembled on the network side NS. Still, after reassembly in the network side NS the respective counter value CV will indicate whether there are any further packets in the transmitter queue TR-QUE or not.

As shown in Fig. 5, for the release of an uplink physical connection TBF, at a certain stage in step ST5al a RLC/MAC data packet containing a counter value CV=0 will be transmitted to the network side. The counter value CV=0 in a packet clearly indicates an empty queue to the network side after transmission, i.e. CV=0 indicates that there are no further "remaining" data packets in the queue after the transmission of the data packet containing CV=0. In this case the network side will first transmit a so-called packet uplink acknowledgement/negative acknowledgement message in step ST5a2 incorporating a final acknowledgement indicator = 1 to the subscriber terminal side. The message in step ST5a2 is to indicate to the subscriber terminal side that the network side has understood that no further data packets are residing in the subscriber terminal side transmitter queue and that an uplink TBF release procedure is to be started. In step ST5a3 the mobile side sends a packet control acknowledgement message to the network side after releasing the physical connection TBF on the mobile side. Finally, after receiving the message in step ST5a3 the network side performs the release of the physical connection on the network side. As can clearly be seen, a certain time is needed to release or terminate the physical connection for the uplink and furthermore signalling resources are occupied in the network.

## SUMMARY OF THE INVENTION

As explained above, during a data packet transfer between the subscriber terminal side and the network side several conditions may occur which lead to the transmission of a transmitter queue information to the respective other side indicating an empty queue in the respective transmitter queue TR-QUE. This results in frequent releases of the physical connection with the subsequent need of additional signalling to rebuild the physical connection whenever new data packets are available in the transmitter queue.

There may be many reasons why the transmitter queue becomes empty, i.e. if the removal rate of the data packets from the transmitter queue varies and is potentially higher than the rate of the arriving packets (see Fig. 4a). As shown in Fig. 4c, another condition which may lead to a physical connection release is if too many packets are taken away from the transmitter queue if for example in a multislot capability 2 mobile station two time slots (transmission resources) are assigned and only two packets are available in the transmitter queue. During the next data packet transfer to the network side, using two time slots on the uplink, the transmitter queue TR-QUE thus becomes empty leading to a corresponding indication CV = 0 which starts the physical connection release procedure. Even when a next packet arrives (as the packet arriving at the dot-dashed line in Fig. 4c) there will first be a physical connection release and thereafter immediately a physical connection establishment due to the new data packet. Such frequent establishment and release of physical connection drastically increase the end-to-end delays.

The inventors have discovered that the increased end-to-end delay during a data packet transmission is due to the fact that conditions in the subscriber terminal side or the network side may lead to empty queues in the subscriber terminal side and thus to frequent physical connection releases consuming time and signalling capacity.

Therefore, the object of the present invention is to provide a network controller, a method, and a communication system in which empty subscriber terminal side queues leading to unnecessary physical connection releases during a data packet transfer from the subscriber terminal side to the network side are avoided and the delay time is reduced.

This object is solved by a network controller (claim 1) of a communication system for performing packet data transfer on a connection between a subscriber terminal side and a network side, wherein during a data packet transfer a physical connection is maintained which indicates in the subscriber terminal and the network side that the subscriber terminal and the network side are valid for performing said packet data transfer, including: a network side receiver for receiving a transmitter queue length information transmitted from a subscriber terminal, said length information indicating the length of a transmitter queue in a transmission buffer in said subscriber terminal; a network side transmission resources controller for assigning to a subscriber terminal transmission resources for the data packet transfer on the uplink connection on the basis of said received length information such that during an active data packet arrival period in which data packets arrive in said transmitter buffer at least one data packet remains in the subscriber terminal side transmitter buffer queue.

Furthermore, this object is solved by a communication system (claim 12) for performing packet data transfer on a connection between a subscriber terminal side and a network side, wherein during a data packet transfer a physical connection is maintained which indicates in the subscriber terminal and the network side that the subscriber terminal and the network side are valid for performing said packet data transfer, comprising: on said subscriber terminal side: a subscriber terminal side transmitter buffer (TBUF) for buffering data packets to be transmitted to the network side as transmitter queue; a subscriber terminal side transmitter queue length information setting means for determining a transmitter queue length information in accordance with the length of said transmitter queue; and
a subscriber terminal side transmitter transmitting in association with each data packet from said transmitter queue said length information to the network side; and on said network side: a network side receiver for receiving said transmitter queue length information transmitted from a subscriber terminal; and a network side transmission resources controller for assigning to a subscriber terminal (SS) transmission resources for the data packet transfer on the uplink connection on the basis of said received length information such that during an active data packet arrival period in which data packets arrive in said transmitter buffer at least one data packet remains in the subscriber terminal side transmitter buffer queue.

Furthermore, the object is also solved by a method (claim 26) in a communication system for performing packet data transfer on a connection between a subscriber terminal side and a network side wherein during a data packet transfer a physical connection is maintained which indicates in the subscriber terminal and the network side that the subscriber terminal and the network side are valid for performing said packet data transfer comprising the following steps: determining on a subscriber terminal side a transmitter queue length information in accordance with the length of said transmitter queue in said subscriber terminal; transmitting in association with each data packet from said transmitter queue said length information to the network side; receiving said transmitter queue length information transmitted from said subscriber terminal; and assigning to said subscriber terminal transmission resources for the data packet transfer on the uplink connection on the basis of said received length information such that during an active data packet arrival period in which data packets arrive in said transmitter buffer at least one data packet remains in the subscriber terminal side transmitter buffer queue.

According to the invention the length information transmitted from the subscriber terminal is used on the network side in order to determine the transmission resources for the next uplink frame such that after transmitting the next uplink frame at least one data packet is left in the subscriber terminal transmitter queue during an active period in which data packets arrive in the transmitter queue. Therefore, it is ensured that the last data packet in the uplink frame contains a length information which indicates a non-empty queue (since still at least one data packet is left in the transmitter queue during the active period). Therefore, the physical connection release procedure is not initiated in an active period.

Preferably, a subscriber terminal side transmitter queue length information setting means is adapted to set as said length information a counter value determined in accordance with the following expression:

$$CV = \text{round up } [(TBC-1)/NTS]$$

where:

CV: counter value transmitted to the network side;
TBC: total number of data packets present in the transmitter buffer; and
NTS: transmission resources defined as the number of time slots (multislot capability NTS) in a single frame used for the data packet transfer on the uplink connection.

Preferably, the network side transmission resources controller decreases the transmission resources between a current transmission frame and the next transmission frame on the uplink connection if the length information indicates that the transmitter queue contains only one data packet. If a multislot capability 1 subscriber terminal is employed, then the length information indeed indicates the exact number of left data packets. However, if a subscriber terminal of a higher multislot capability (e.g. 2, 3, 4 etc.) is used, then the counter value (length information) having a value of 1 can indicate 1, 2 or more data packets in the transmitter queue.

Preferably, a physical connection terminating device is adapted to terminate said physical connection when a CV evaluation means determines that at least one of said counter values has a value of CV=0.

Preferably, the resource controller is not only capable to decrease the transmission resources in order to have only one data packet present in the transmitter queue, but it can also increase the transmission resources (timeslot) if an increasing number of data packets is detected in the transmitter queue. It is not always the case that the removal rate from the transmitter queue equals the arrival rate of data packets in the transmitter queue, e.g. it may happen that suddenly at a certain time point the transmitter queue is flooded with data packets which can be removed only slowly by using a small number of transmission resources. Therefore, in such a case the transmission resource controller increases the transmission resources such that a maximum number of data packets are transmitted in one uplink frame whilst of course the increase in the transmission resources is such that still one data packet remains in the transmitter queue even if more resources are allocated. Therefore, further preferably, said network side transmission resources controller assigns the maximum admissible number of time slots when said CV evaluation means determines that all presently received counter values have a value of CV>1.

Further preferably, when said CV evaluation means determines that at least one counter value has a value of CV=1 and at least one counter value has a value of CV>1, said network side transmission resources controller assigns a new number of time slots NNTS in accordance with the following relationship:

$$NNTS = NTS - NO(CV=1)$$

where NNTS is the new number of time slots for the next uplink frame, NTS is the multislot capability of the subscriber terminal and NO(CV=1) designates the number of counter values having a value of CV=1.

Further preferably, when said CV evaluation means determines that all presently received counter values have a value of CV=1, said network side transmission resources controller assigns a minimum number of time slots.

Preferably, said minimum number of time slots is one time slot when the arrival rate of data packets into the transmitter buffer queue is higher or equal than the removal frequency of data packets from said transmitter buffer queue.

Preferably, an arrival rate estimator is adapted to estimate the arrival rate of data packets into the transmitter queue on the subscriber terminal side on the basis of the received counter values received within a measurement time interval.

Preferably, the transmission resources are further assigned on the basis of the estimated arrival rate.

Preferably, said minimum number of time slots is adjusted on the basis of the estimated arrival rate.

Further advantageous embodiments and improvements of the invention can be taken from the other dependent claims. Furthermore, it should be noted that the invention is not restricted to the examples and embodiments described in the description and claimed in the claims. In particular, the present invention comprises embodiments which result from a combination of features and/or steps which have been separately described and/or claimed.

Therefore, the skilled person can carry out variations and modifications at the teaching disclosed here and all such modifications and variations are considered to fall within the scope of the present invention.

## BRIEF DESCRIPTION OF THE DRAWINGS

Fig. 1 shows a principal overview of a GPRS network architecture;

Fig. 2 shows a typical GPRS protocol structure;

Fig. 3 shows a subscriber terminal side and a network side in accordance with the prior art;

Fig. 4a shows a schematic example of a physical connection handling problem, when the transmitter queue becomes empty;

Fig. 4b shows the typical packet data traffic shape according to the G.723.1 speech coder;

Fig. 4c shows the emptying of a transmitter queue with a static assignment of resources from the network side;

Fig. 5 shows the release of an uplink physical connection according to the prior art;

Fig. 6 shows a principal block diagram of a subscriber terminal side and a network side according to the principle of the invention;

Fig. 7 shows a flowchart for determining transmission resources according to the principle of the invention;

Fig. 8 shows the adjustment of the transmission resources (timeslots) in accordance with the embodiments of the invention;

Fig. 9 shows an example of decreasing the number of timeslots for illustrating the procedure in Fig. 8 for a multislot capability 2 mobile station when the transmission rate and the arrival rate are equal (1/20ms);

Fig. 10 shows a continuation of Fig. 9 for the case when the application stops producing data packets and a TBF release is started due to CV=0;

Fig. 11 shows the steps in Fig. 9 and Fig. 10 in combination for a fixed data packet arrival rate of 1/30ms;

Fig. 12 shows a similar example as in Fig. 11 but for the adjustment of the number of timeslots for a multislot capability 4 mobile station where again it is assumed that there is a constant rate arrival of data packets into the transmitter queue;

Fig. 13 shows an example similar to Fig. 11 for a multislot capability 1 mobile station where again it is assumed that a constant arrival rate (30ms) of data packets into the transmitter queue is present and where the removal rate (transmission rate) is assumed to be higher than the arrival rate; and

Fig. 14a shows an example of decreasing the number of resources for a multislot capability 3 subscriber terminal without using the steps ST82" and ST83" in Fig. 8;

Fig. 14b shows an example of decreasing the number of resources for a multislot capability 3 subscriber terminal with using the steps ST82" and ST83" in Fig. 8; and

Fig. 15 shows another embodiment of the invention for estimating the arrival rate of data packets in the transmitter queue on the network side.

In the drawings the same or similar reference numerals denote the same or similar steps and parts throughout. However, it should be also noted that the invention can comprise embodiments which consists of combinations of the respective flowcharts and block diagrams and that the invention is not limited to a separate consideration of the separately described and illustrated embodiments.

## PRINCIPLE OF THE INVENTION

Fig. 6 shows a principle block diagram of the functionalities incorporated in particular on the network side as well as on the subscriber terminal side according to the embodiments of the invention. In addition to the devices already explained with reference to Fig. 3, the network side NS comprises a network controller NC according to the invention.

A network side receiver NS-RC is provided for receiving the data packets and the transmitter queue length informations CV transmitted from a subscriber terminal SS in association wit the data packets. The length information CV indicates the length of a transmitter queue in a transmission buffer TR-BUF in the subscriber terminal SS and the value of the respectively received length information CV is evaluated in an CV evaluation means CV-VAL of the network controller NC.

Furthermore, the network controller NC comprises, as already explained with reference to Fig. 3, a network side transmission resources controller SCH-RES. For example, in a GPRS system as explained with reference to Fig. 1 and the protocol structure in Fig. 2, the MAC layer provides the multiplexing of several mobile stations on the timeslot structure of GSM and arbitrates between multiple mobile stations attempting to allocate resources and transmitting simultaneously. The operations of the MAC functions allow a single mobile station to use more then one timeslot (TS) simultaneously. The GPRS MAC layer is responsible for providing efficient multiplexing of data and control signalling on the uplink and downlink connections UL, DL.

On the uplink the multiplexing is controlled by transmission resources allocation to individual users. This is done by resource requests which are sent by the mobile station to the network wherein the network resource controller then has to schedule the timeslots on the uplink. As also explained above, if several mobile stations simultaneously use the uplink towards the network side, the uplink state flag USF is used by the network to control the multiplexing of different mobile stations on the uplink connection UL. The uplink state flag indicates thus the owner of the corresponding uplink radio block whilst the MAC layer acting as the resource controller controls the multiplexing on the uplink connection by medium allocation to the individual users. As explained with reference to Fig. 4c above, such an assignment of timeslots (transmission resources) for the next transmission on the uplink frame is made in steps ST4cl, ST4c3, ST4c5.

However, whilst in the example of the related art according to Fig. 4c the resource allocation is made in accordance with the multislot capability of the respective subscriber terminal (e.g. if the subscriber terminal can transmit on two timeslots at the same time, two timeslots will be reserved if the traffic load in the network allows to do so), according to the invention the network side transmission resources controller NC assigns to a subscriber terminal transmission resources for the next TDMA frame on the uplink connection frame UL on the basis of said received length information CV. More particularly, the resources controller SCH-RES controls the available transmission resources in such a manner that during an active data packet arrival period in which data packets arrive in said transmitter buffer at least one data packet DP remains in the subscriber terminal side transmitter buffer queue TR-QUE of the transmission buffer TR-BUF. That is, in an active period in which actually data packets generated by an application arrive in the transmitter buffer the network controller adjusts the resources such that at least one data packet is available in the transmitter buffer queue to be transmitted to the network side in the next uplink frame.

The active period is a period in which actually no physical connection release is desired from the network side or the subscriber terminal side, i.e. in this period the application continuously generates data packets which arrive at the transmitter buffer and which should be transmitted to the network side without an unnecessary and undesired physical connection release. An active period can for example be determined by evaluating the inter-arrival time of data packets arriving on the subscriber terminal side and determining an active period as period in which all inter-arrival times are lower than a predetermined threshold. Such an example is e.g. described in the European patent application Nr. XX XXX XXX filed by the same applicant as the present application on the same date which is herewith incorporated in the present application via reference. Alternatively, it is possible to determine an active period simply by periodically, e.g. every 30ms, checking the transmitter queue in order to determine whether a new packet has arrived or not. If always a new packet is detected than the active period is determined to be continued and otherwise the active period is determined to be terminated in which an emptying of the transmitter queue will be allowed resulting in a TBF release subsequently.

Since for every data packet on the uplink frame a corresponding length information of the transmitter queue TR-QUE is transmitted (preferably for example in the header of the data packet), the network controller NC can always make an assessment of the still remaining data packets in the transmitter queue. As a worst case the network controller NC must assume that no further data packet enters the transmitter queue TR-QUE and therefore the resources controller can adapt the transmission resources for the next uplink frame depending on the last received length information (s).

As explained above, according to the prior art a length information (e.g. the counter value CV) can be a rounded value with respect to the number of remaining data packets in the transmitter queue. This type of conventional counter value is usable with the invention. However, hereinafter, it will be explained how the subscriber terminal side transmitter queue length information setting means CV-SET sets, in accordance with a preferred embodiment of the invention, as said length information CV a modified counter value CV determined in accordance with the following expression:

$$CV = \text{round up } [(TBC-1)/NTS]$$

where:

CV: counter value transmitted to the network side;
TBC: total number of data packets (DP) present in the transmitter buffer (TR-BUF); and
NTS: transmission resources (TS) defined as the number of time slots (multislot capability NTS) in a single frame used for the data packet (DP) transfer on the uplink connection (UL).

As will be appreciated, for a multislot capability 1 subscriber terminal (generally a communication station) the counter value CV will indeed exactly indicate the number of remaining packets. For any subscriber terminal of a higher multislot capability, the counter value will be rounded up and therefore can indicate that 1, 2, 3 or a higher number of data packets are still remaining in the transmitter queue. As will be explained below, even for higher multislot capabilities the network transmission resources controller SCH-RES can however make a worst case analysis on the basis of this length information CV such that the transmitter queue never becomes empty during an active data packet arrival period in which data packets arrive in said transmitter buffer queue.

Fig. 7 shows a flowchart in accordance with the method of the invention. In step ST71 the subscriber terminal side transmitter queue length information setting means CV-SET determines the length information CV in accordance with the length of the transmitter queue TR-QUE. Preferably, the length information setting means CV-SET determines the number of data packets DP of the transmitter queue TR-QUE and sets said transmitter queue length information CV in accordance with the determined number of data packets DP. The fact that the length information is set in accordance with the determined number of data packets means, in accordance with the above-mentioned formulas, that only for the multislot capability 1 subscriber terminal the exact number of data packets is indicated in the counter value CV. For multislot capabilities of a higher order there is only a setting in accordance with the number of data packets due to the roundup process.

In step ST72 the subscriber terminal transmitter SS-TR transmits the length information in combination with the data packet to the network side controller NC using the currently assigned resources. The length information CV can be transmitted (e.g. on a separate channel) synchronized to the transmitted data packet and preferably the length information CV can be incorporated in a part of the data packet, for example in the header of the data packet.

In step ST73 the network side receiver NS-RC receives the length information CV and in step ST74 the network transmission resources controller SCH-RES determines the transmission resources for the next uplink frame.

As indicated in step ST74 in Fig. 7, the network resources controller SCH-RES can actually decide to decrease or increase or keep constant i.e. to adapt the transmission resources for the next frame. The determination in step ST74 is made in accordance with the length information such that at least one data packet remains in the subscriber terminal transmitter queue TR-QUE during an active data packet arrival period in which data packets arrive in said transmitter buffer queue.

In step ST75 the network controller NC assigns the resources determined in step ST74 to the next uplink frame and informs the subscriber terminal of the newly assigned transmission resources by a corresponding flag in a downlink packet or by a signalling information. This is shown, e.g. in step ST4c1, ST4c3, ST4c5 of Fig. 4c.

It should be noted, that preferably the network side transmission resource controller SCH-RES adapts (see step ST84 to be discussed below) e.g. by decreasing the transmission resources between a current transmission frame and the next transmission frame on the uplink connection if at least one length information of at least one uplink data packet indicates that the transmitter queue contains only one data packet (see step ST82" to be discussed below). The decreasing of transmission resources (timeslots) available for data packets on the next uplink TDMA frame actually makes sure that the transmitter queue never becomes empty during an active data packet arrival period in which data packets arrive in said transmitter buffer queue, by contrast to a case where keeping the number of timeslots constant for the next uplink frame would completely empty the queue.

Alternatively, if a large number of data packets is available in the transmitter queue, for example if the removal rate from the transmitter queue is lower than the arrival rate of data packets, then it also makes sense to increase (see step ST83' to be discussed below) the number of available timeslots for the next uplink frame connection, e.g. to set the maximum number of time slots depending on the multislot capability. However, it may not be possible to increase the number of timeslots to the maximum multislot capability because too many transmission resources (timeslots) may again empty the transmitter queue completely. Therefore, preferably the network controller NC increases the resources only to such an extent that at least one data packet again remains in the transmitter queue after the next uplink frame transmission during active periods of data packet arrival in the transmitter queue.

Fig. 8 shows the contents of the resource determination step ST74. In step ST81 the network side transmission resources controller SCH-RES reads all CV values associated with all data packets currently transmitted in the present uplink frame. For example, if the CV values are incorporated in the header of the data packets, the CV values are read from the headers of the data packets. Depending on the multislot capability, one, two or more CV values can be read.

In steps ST82 ... ST85 the transmission resource controller SCH-RES carries out a determination as to how many timeslots should be used in the next uplink TDMA frame on the basis of the CV value or CV values read in step ST81, i.e. on the basis of the read CV value(s) the network side transmission resources controller SCH-RES decreases or increases or keeps constant the time slots for the next uplink TDMA frame.

In step ST82 it is checked whether at least one CV value is CV = 0. If at least one CV value is CV = 0 then this indicates an empty queue and in step ST83 a physical connection (TBF) release procedure is carried out in step ST83, for example in accordance with Fig. 5. If there is no CV value satisfying CV = 0 ("N" in step ST82) then step ST82' is carried out.

In step ST82' it is checked whether at least one CV value is CV = 1. If so ("Y" in step ST82') then this indicates that there is danger that only one data packet is left in the transmitter queue. Of course, only for the multislot capability 1 (one timeslot per TDMA frame) this will indicate the actual number of data packets left, that is only one data packet; for a higher multislot capability this may indicate one or more data packets left. Preferably, in step ST82" it may also be checked whether at least one CV value is CV > 1. If there are no CV values satisfying CV > 1 ("N" in step ST82' ') then all CV values will satisfy CV = 1. As a safeguard measure in step ST84 therefore the transmission resource controller SCH-RES assigns only a minimum number of time slots in step ST84. The minimum number of time slots may be only one time slot or even zero time slots depending on the arrival time. As will be explained below with respect to an estimation process (Fig. 15) there may be a case where actually the removal rate is higher than the arrival rate of data packets such that after removing one data packet from the transmitter queue no further data packet may arrive in the queue. In this case the transmission resources must be reduced to zero in the next uplink frame since otherwise an emptying of the last remaining data packet in the queue may occur thus causing a TBF release.

In step ST83" the transmission resources controller SCH-RES determines the new number NNTS of time slots for the next uplink frame in accordance with the following relationship:

$$NNTS = NTS - NO(CV=1)$$

where NNTS is the new number of time slots for the next uplink frame, NTS is the multislot capability and NO(CV=1) indicates how often a counter value of CV=1 was received in association with data packets transferred from the terminal side in the last uplink frame. It should be noted that steps ST82", ST83" are provided in order to avoid that too many data packets reside in the transmitter buffer. However, it should be understood that these two steps are optional and that Fig. 8 is to illustrate the reducing and increasing of transmission resources dependent on the counter value CV and that steps ST82", ST83" are only preferred examples in order to more rapidly reduce the number of packets in the transmitter queue.

On the other hand, if in step ST82' it is determined that all counter values CV satisfy CV > 1, this means that there are a sufficient number of data packets in the transmitter queue to allow to set in step ST83' the maximum number of time slots possible depending on the multislot capability.

Thus, step ST82' and step ST84 make sure that during the controlling and determination of transmission resources at least one data packet remains in the transmitter queue during an active data packet arrival period in which data packets arrive in said transmitter buffer queue. Thus, the end-to-end delay can be minimized and at the same time the removal rate of data packets can be maximized, since there is a variable adjustment of the transmission resource allocation dependent on the current length of the transmitter queue.

The above described procedure and the examples below should only be taken as an illustration how an adjustment of the transmission resources can be made if it is assumed that each data packet occupies a single timeslot on the uplink frame. However, a skilled person can determine other reductions and increases of the transmission resources if the data packets are differently distributed over several timeslots on the uplink frame, e.g. because of a segmentation, i.e. if a single application data packet is distributed over more than one RLC data packet.

**EXAMPLE 1: Multislot Capability 2 Decrease**

Fig. 9 shows an example how the adaptation of transmission resources makes sure that during an active data packet arrival period in which data packets arrive in said transmitter buffer queue at least one data packet remains in the transmitter queue TR-QUE using the procedure of Fig. 8. In the example in Fig. 9 it is arranged that three data packets remain in the queue.

In Fig. 9 it is assumed that the mobile station has a multislot capability of two timeslots. Furthermore, it will be appreciated that the number of remaining data packets in the transmitter queue will depend on the fact whether or not the removal rate of data packets equals the arrival rate of data packets, e.g. from a real time application. In Fig. 9 it is assumed that the real time application generates a single packet at a generation (arrival) rate of 1/20 ms. In the shown scenario, each 20 ms data packets can be transmitted from the queue via assigned resources. Furthermore, in Fig. 9 it is assumed that the application PDU results in exactly one RLC PDU, i.e. no application data packet segmentation occurs. Furthermore, in Fig. 9 it is assumed that the establishment for a physical connection TBF requires 150 ms, i.e. a time interval in which potentially 7 additional data packets may arrive in the transmitter queue (i.e. one packet which triggers the TBF setup and 7 further packets which arrive subsequently at a 1/20ms arrival rate).

In step ST91 a first data packet in the transmitter queue triggers the TBF establishment. Since the TBF establishment takes about 150 ms, the before mentioned 8 additional data packets have arrived in the transmitter queue. Since no data packet has yet been transferred with a counter value CV (and thus no resource re-adjustment was possible), the network side (the base station system BSS) assigns the two (maximum number of) timeslots 2TS in step ST91.

In step ST92 two of the 8 data packets will be transferred on the two timeslots with a counter value of CV = 4 and CV = 3, respectively. Since in step ST92 no counter values CV fulfil CV = 0 and since all counter values CV are larger than 1, i.e. CV > 1, the network side assigns in step ST92 still the maximum number of 2 timeslots TS in accordance with step ST83'.

Since it is assumed in Fig. 9 that the removal rate (not the transmission rate which is different to the removal rate (removal frequency) for terminals with a multislot capability greater than 1; in Fig. 9, for example: 2TS assigned -> 2 packets/20ms -> 1 packet/10ms whilst the removal rate determining whether the queue will be emptied or not is 1/20ms) of data packets from the transmitter buffer is twice the arrival rate of data packets, in step ST93 there will be again available seven data packets = (8-2 transmitted data packets) + one new data packet. Therefore, in step ST93 again two data packets can be transferred with counter values CV = 3 and therefore again the base station system BSS will assign the maximum possible number of two timeslots 2TS in step ST93. The procedure carries on until in step ST94 there will be only four data packets left in the transmitter queue. Therefore, in step ST94 a question in step ST82' will be answered with "Y" since one counter value CV satisfies CV = 1. Above, it has already been explained that steps ST82" and step ST83" are optional, however, the setting of the timeslot in accordance with step ST84 or with step ST83" for the scenario on step ST94 leads to the same result, i.e. in step ST94 the transmission resources are decreased and only one timeslot 1TS is assigned.

In step ST94 two data packets have been transferred and (at equal removal frequency) in step ST95 there will be again three data packets in the transmitter queue. Since only one timeslot 1TS is available in step ST95 one data packet is transmitted again indicating a counter value of CV = 1. Therefore, in accordance with step ST84 only one timeslot 1TS is assigned in step ST95.

Since one data packet has been transferred in step ST95 (reducing the number of remaining data packets in the transmitter queue to two data packets) and a further data packet has arrived in the meantime, in step ST96 there are actually again available three data packets in the transmitter queue. Therefore, again step ST84 will be executed and the transmission resource allocation goes in a steady state after step ST96 with continuously providing three data packets in the transmitter queue.

The procedure in Fig. 9 can be summarized as follows. In the beginning, as many timeslots TS as possible are assigned. If all data packets with CV > 1 are received, then as many timeslots TS as possible are assigned in the next TDMA frame. If at least one data packet with CV = 1 is received, then only one time slot 1TS is assigned in the next TDMA frame, in accordance with rules as listed in Fig. 8.

Fig. 10 shows a continuation of Fig. 9 for the case that the application stops producing data packets, i.e. that no further data packets arrive in the transmitter queue. In step ST100 (as continuation of e.g. step ST96) only one timeslot 1TS was assigned. Therefore, in step ST101 one data packet is transferred with CV = 1 and therefore step ST84 again sets only one timeslot 1TS in step ST101.

In step ST102 only two data packets are still available in the transmitter queue and one data packet will be transferred with CV = 1. Again, step ST84 will assign only a single timeslot 1TS in step ST102.

In step ST103 only one data packet will be left and this single data packet is of course transferred with CV = 0 in step ST103. As indicated with step ST83 in Fig. 8, whenever a counter value CV with CV = 0 is received, a logical connection TBF release procedure is started in accordance with Fig. 5.

The procedure of transmitting data packets for a timeslot capability 2 mobile station is illustrated with steps ST94, ST95, ST96 in Fig. 9 and steps ST100, ST101, ST102, ST103 in Fig. 10 is summarized with steps ST110-ST1113 in Fig. 11.

The difference is that in Fig. 11 every 30 ms a data packet is assumed to enter the transmitter queue TR-QUE.

Fig. 12 and Fig. 13 show two corresponding examples to Fig. 11 for a multislot capability 4 mobile station and a multislot capability 1 mobile station, respectively.

## EXAMPLE 2: Multislot Class 3 Decrease

Fig. 14a is an example for a multislot capability 3 mobile station when the step ST82' ' and step ST83' ' in Fig. 8 are not used. Also in Fig. 14a it has been assumed that the removal frequency equals the arrival rate of data packets. In step ST14a1 three timeslots 3TS, i.e. the maximum number of timeslots, were assigned. It is assumed that within the time interval of 150 ms 8 data packets have arrived in the transmitter queue.

Therefore, in step ST14a2 three data packets in three different timeslots can be transmitted having counter values CV = 3, CV = 2, CV = 2. Since no counter value CV satisfies the relationship in step ST82', in step ST14a2 once more three timeslots 3TS are assigned.

Thus, in step ST14a3 6 data packets = 8 data packets - 3 data packets + 1 new data packet are available in a transmitter queue. In step ST14a3 three data packets with CV = 2, CV = 2, CV = 1 are transmitted. Therefore, the question in step ST82' is answered with "Y" and - since it is assumed in Fig. 14a that step ST82" and step ST83" are not present - step ST84 will only assign one timeslot 1TS in step ST14a3.

Since three data packets have been transferred in step ST14a3 and one further data packet has arrived, in step ST14a4 four data packets are available in a transmitter queue. Since four data packets are available in a multislot capability 3 mobile station and only one timeslot 1TS is assigned, a single data packet with CV = 1 (CV=(4-1)/3=1) is transmitted in step ST14a4.

It can be clearly seen from Fig 14a that the single occurrence of CV = 1 has caused to only assign one timeslot in step ST84 and thus an unnecessary large number of data packets is still available in the transmitter queue after ST14a4.

Fig. 14b shows the decreasing of timeslots for more rapidly reducing the transmitter queue, by using the step ST82" and the step ST83". Steps ST14b1, ST14b2 in Fig. 14b correspond to the steps ST14a1, ST14a2 in Fig. 14a. Therefore, in step ST14b3 three data packets with CV = 2, CV = 2, CV = 1 are transmitted. However, by contrast to Fig. 14a, it is now decided in step ST82" that at least one counter value CV satisfies CV > 1 (namely, two counter values CV are CV =2) and therefore, the number of timeslots are assigned in accordance with step ST83 ' ', i.e.

Assignment = multislot capability - number of CV = 1.

As indicated in step ST14b3 the new number of timeslots assigned is 3 (multislot capability) - 1 (CV = 1 once) = 2. Therefore, in step ST14b4 there can still be transmitted two data packets (two timeslots are available) and both of them will be transferred with a counter value CV = 1. Since both counter values are CV = 1, step ST82" will be answered with "N" and therefore, step ST14b4 again assigns only one timeslot 1TS.

As can be seen from the comparison of Fig. 14a and Fig. 14b, the rule defined in step ST82" and step ST83' ', namely that if at least one CV = 1 and one CV > 1 then the assignment of timeslots will be the multislot capability minus the number of CV = 1, the speed of reduction of existing packets in the transmitter queue can be increased.

Of course, the above examples are only an illustration of how the network resource controller can increase or decrease the number of timeslots for the next uplink frame without emptying the transmitter queue. Therefore, on the basis of the indicated length information (counter value) the transmission controller can increase or decrease or keep constant the number of timeslots such that even in the worst case still one data packet remains in the transmitter queue during an active data packet arrival period in which data packets arrive in said transmitter buffer queue.

Of course, it will be appreciated that the increasing and decreasing of the number of timeslots will be most accurate for single slot terminals because here the counter value CV directly indicates the number of remaining data packets in the transmitter queue. Nevertheless, it is possible by exactly monitoring the CV value of the last packets to increase the precision. That is, even for a multislot class of higher order, the network controller can repeatedly evaluate the counter values CV over several uplink frames and can thus obtain a higher precision about the actual available number of data packets in the transmitter queue.

Furthermore, as already mentioned above, the minimum number of time slots to which the resources are set for the next uplink frame may also be zero, for example in the case when the removal frequency of the data packets from the queue is higher than the actual arrival rate of data packets into the queue something that can be estimated with the estimation process described below.

## ESTIMATION OF DATA PACKET ARRIVAL RATE

Fig. 15 shows another embodiment of the invention for estimating the arrival rate of data packets in the transmitter queue on the network side.

As explained above with reference to Fig. 8 and the examples, the network side NS increases or decreases or keeps constant the number of timeslots TS or the next uplink TDMA frame on the basis of an evaluation of the counter value(s) CV. However, the counter value CV cannot only be used for adjusting the number of timeslots, but it can also be used for providing a rough estimate of the data packet arrival rate in the transmitter queue as will be explained hereinafter. The estimation of the arrival rate at the sender queue can be used for an adaption of the minimum assignment of timeslots to the estimated arrival rate.

Fig. 15 shows a simple example for a multislot capability 1 mobile station having a removal frequency from the transmission buffer of 1/20 ms. The arrival rate is assumed to be constant and equal to 1/40 ms. The arrival rate estimator AR-EST (see Fig. 6) estimates the arrival rate on the basis of the received counter values CV within a measurement time interval.

As indicated in Fig. 15, a measurement time interval T of 60 ms is selected as an example. After assigning one timeslot 1TS in step ST151 it is assumed that the transmitter queue TR-QUE contains three data packets. Therefore, in step ST152 the first counter value received in the measurement time interval T is CV = 2. For a multislot capability 1 mobile station this exactly corresponds to two remaining data packets in the queue. Therefore, the estimator AR-EST estimates that before step ST152 (i.e. at the beginning of the measurement time interval T) a total number of three data packets where in the transmitter queue, i.e. the data packet starting number is Pan = 3.

Likewise, at the end of the measurement time interval T the estimator AR-EST estimates the final number of data packets in the transmission queue. Since the last received value of CV was CV = 1 in step ST58, the estimator AR-EST determines as the final number of remaining data packets Pen = 2.

Furthermore, the network side estimator AR-EST can determine how many data packets were transferred in the time T, on the basis of the assigned timeslots (in Fig. 15 it is assumed that one data packet always only occupies one timeslot TS). That is, the estimator AR-EST determines that in steps ST152, ST154 and ST156 a total number of NATS = 3 data packets have been transferred within the measurement time interval T.

As indicated with the black squares in Fig. 15, additional packets arrive in the transmitter queue TR-QUE at 10 ms and 50 ms, i.e. at a constant rate of 1/40 ms. On the basis of the determined values T, Pan, Pen and NATS, the estimator AR-EST can now estimate the arrival rate on the basis of the following calculation:

$$\text{Arrival rate AR} = (\text{Pen} + \text{NATS} - \text{Pan})/T$$

For the example in Fig. 15 this equation yields

$$\text{AR} = (2 + 3-3)/60 \text{ ms} = 1/30 \text{ ms} \ (= 2/3 \text{ packets}*1/20 \text{ ms}).$$

As can be seen, the arrival rate estimator AR-EST estimates the arrival rate to be 1/30 ms whilst the actual arrival rate is 1/40 ms. Despite using a multislot capability 1 mobile station (where the counter value CV really indicates the actual number of remaining packets) there still results an uncertainty of the estimation which is obviously due to the fact that the measurement and the packet arrival in the transmitter queue may not be synchronized. For example, since the network side arrival rate estimator AR-EST must set a starting point and an endpoint for the measurement time T, it might happen that the transmission of the packet in step ST152 is still included in the measurement or excluded. Therefore, even for a multislot capability 1 mobile station such an uncertainty exists.

Of course, the higher the multislot capability is the higher the uncertainty becomes due to the higher uncertainty of the number of packets indicated by the counter value CV. Furthermore, of course the network side arrival rate estimator AR-EST must take into account whether or not a single data packet is only transmitted in a single timeslot (as in the above examples) or whether in fact a data packet has its bits distributed over several data packets. However, a skilled person can derive such relationships on the basis of the above teaching for the special case of the multislot capability 1 mobile station and the provision that only one application PDU results in exactly one RLC PDU, i.e. no segmentation takes place.

Alternative methods of monitoring the arrival rate are of course the terminal monitoring of the rate and a signalling of the arrival rate to the network side NS. Alternatively, the network side NS arrival rate estimator AR-EST could evaluate time stamps provided on the data packets. Before coming to the special use of the determined (estimated) arrival rate AR, hereinafter a modification of the arrival rate estimation is described.

As already explained above, there is an uncertainty in the arrival rate estimation. The real arrival rate amounted to 1/40 ms and the estimated arrival rate was 1/30 ms, i.e. the network side would in such a case actually assume that more data packets are being provided in the transmitter queue than are actually existing. To make a more conservative estimation of the arrival rate, the arrival rate estimator AR-EST according to another embodiment of the invention can also use the following modified expression:

$$\text{Arrival rate AR} = (\text{Pin} + \text{NATS} - \text{Pan} - 1)/T.$$

For the above-described example, this value of AR amounts to AR = (2 + 3 - 3 - 1)/60 ms = 1/60 ms. Thus, the estimator AR-EST conservatively assumes that less data packets exist than are actually present in the transmitter queue which thus does not cause any problems with the transmitter queue emptying when timeslots TS are assigned in accordance with Fig. 8.

Based on the arrival rate estimation on the network side NS the resource scheduler SCH-RES can perform an adaption of the resource allocation on the basis of the estimated arrival rate. For example, if the transmission rate is 1/20 ms in Fig. 15, then the estimated rate

AR = 2/3 packets*1/20 ms (1/30 ms) indicates that a minimum assignment = 2/3 packets per TDMA frame is possible. Therefore, the minimum assignment can be determined to be the transmission rate TR (assumed to be constant) divided by the estimated rate AR, i.e.

MA (minimum assignment) = 20 ms/30 ms packets per TDMA frame.

If the minimum assignment of 1TS/TDMA frame still leads to TBF releases with subsequent re-establishments, the transmission resource scheduler SCH-RES can decide to decrease the minimum assignment MA, e.g. 1TS/2TDMA frame; 2TS/3TDMA frames etc. Alternatively, it is possible to start with the full assignment in the beginning, i.e. transfer as many data packets, but start with 1TS/TDMA frame in order to avoid the possibility of emptying the queue already with the first assignment.

Thus, on the basis of the estimated arrival rate of data packets into the transmitter queue the resources controller SCH-RES can determine how many packets should be sent per TDMA frame, i.e. an even more accurate determination of the number of necessary timeslots TS can be made in order to minimise the number of packets queued at the sender side.

As mentioned above, it should be noted that also application PDU segmentation is possible. In the above explanation it was assumed that each data packet only occupies one timeslot. Therefore, the above described procedure and the examples below should only be taken as an illustration how an adjustment of the transmission resources can be made if indeed it is assumed that each application PDU results in exactly one RLC PDU. However, a skilled person can determine other reductions and increases of the transmission resources if the data packets are differently distributed over several timeslots on the uplink frame, or if segmentation applies.

Of course, the above examples are only an illustration of how the network resource controller can increase or decrease the number of timeslots for the next uplink frame without emptying the transmitter queue. Therefore, on the basis of the indicated length information (counter value) the transmission controller can increase or decrease or keep constant the number of timeslots such that even in the worst case still one data packet remains in the transmitter queue.

Of course, it will be appreciated that the increasing and decreasing of the number of timeslots will be best for single slot terminals because here the counter value CV directly indicates the number of remaining data packets in the transmitter queue. Nevertheless, it is possible by exactly monitoring the CV value of the last packets to increase the precision. That is, even for a multislot capability of higher order, the network controller can repeatedly evaluate the counter values CV over several uplink frames and can thus obtain a higher precision of the actual available number of data packets in the transmitter queue.

## INDUSTRIAL APPLICABILITY

As explained above, the variable adjustment of the transmission resources for the uplink frame transmission avoids unnecessary physical connection releases since the physical connection terminating device LC-TERM will only start a physical connection release procedure if an empty queue (zero length) is indicated in the length information. Therefore, the end-to-end delay, in particular for real-time application such as audio/speech transmission is reduced. The avoidance of unnecessary physical connection releases results also in a lower signalling load thus occupying less signalling resources in the network. Of course, the last data packet belonging to an active period is unnecessarily delayed. However, this is by far outweighted by the avoidance of unnecessary physical connection releases.
The above described determination and allocation of transmission resources in accordance with the invention further has the advantage that also (E)GPRS connections comprising mobile station equipment from various manufacturers can show an improved end-to-end delay because due to the allocation of the transmission resources it is always ensured that also the different types of mobile stations at least have one data packet present in the transmitter queue during an active data packet arrival period in which data packets arrive in said transmitter buffer queue. The invention has in particular the advantage that it can be implemented in any network, e.g. in a (E)GPRS network, without having to perform changes at the respective terminals because the resource control is entirely possible from the network side.
The transmission resources controller according to the invention can not only adapt (increase, decrease) the transmission resources for the next uplink TDMA frame, but it can also estimate the arrival rate of data packets into the transmitter queue on the basis of an evaluation of the counter values received within a measurement time interval. It is also possible that the transmission resources controller performs the increasing or decreasing of transmission resources, i.e. a minimum assignment, on the basis of the estimated arrival time.
Although in the above examples a GPRS system for packet transmission has been considered, the skilled person realizes that similar resource adjustment procedures can be implemented in other packet data communication systems. Therefore, a skilled person on the basis of the above teachings can perform further modifications and variations of the invention and all such modifications and variations are intended to fall in the scope of the attached claims. In particular, the invention can comprise embodiments which result from a combination of steps and features which have been separately described in the specification and/or claimed in the claims. Therefore, it should be understood that the above described embodiments are only the best mode of the invention presently conceived by the inventors.
Reference numerals in the claims only serve clarification purposes and do not limit the scope of these claims.

## Claims

1. A network controller (NC) of a communication system (SYS) for controlling packet data transfer on a connection (UL, DL) between a subscriber terminal (SS) side and a network side (NS), wherein during a data packet transfer a physical connection (TBF) is maintained which indicates in the subscriber terminal (SS) and the network side (NS) that the subscriber terminal (SS) and the network side (NS) are valid for performing said packet data transfer, including:
a network side receiver (NS-RC) for receiving transmitter queue (TR-QUE) length information (CV) transmitted from a subscriber terminal (SS), said length information (CV) indicating the length of a transmitter queue (TR-QUE) in a transmission buffer (TR-BUF) in said subscriber terminal (SS);
***characterized by***
a network side transmission resources controller (SCH-RES) for assigning to a subscriber terminal (SS) transmission resources (TS) for the data packet transfer on the uplink connection (UL) on the basis of said received length information (CV) such that during an active data packet arrival period in which data packets arrive in said transmitter buffer queue at least one data packet (DP) remains in the subscriber terminal side transmitter buffer queue (TR-QUE).

2. A network controller according to claim 1,
***characterized by***
a network side physical connection controller (LC-CTRL) including a physical connection maintaining device (LC-MAIN) for maintaining said physical connection (LC) when the received transmitter queue (TR-QUE) length information (CV) indicates (CV>0) a non-empty transmitter queue (TR-QUE) and a physical connection terminating device (LC-TERM) for terminating said physical connection (LC) when the determined transmitter queue (TR-QUE) information (CV) indicates (CV=0) an empty transmitter queue (TR-QUE).

**3.** A network controller according to claim 2,
***characterized in that***
said received length information (CV) is a counter value whose value CV corresponds to the length of the transmitter buffer queue (TR-QUE), said transmission resources are time slots on a TDMA uplink frame, said network side receiver (NS-RC) is adapted to receive one or more data packets and their associated counter values CV on the time slots said uplink frame, a CV evaluation means (CV-VAL) is provided to determine (ST82, ST82', ST82") the value of each received counter value, and said network side transmission resources controller (SCH-RES) is adapted to assign as said network resources a predetermined number of time slots for the uplink frame.

**4.** A network controller according to claim 2 or 3,
***characterized in that***
said physical connection terminating device (LC-TERM) terminates (ST83) said physical connection (LC) when said CV evaluation means (CV-VAL) determines that at least one of said counter values has a value of CV=0.

**5.** A network controller according to claim 2 or 3,
***characterized in that***
said network side transmission resources controller (SCH-RES) assigns (ST83') the maximum admissible number of time slots (TS) when said CV evaluation means (CV-VAL) determines that all presently received counter values have a value of CV>1.

**6.** A network controller according to claim 2 or 3,
***characterized in that***
when said CV evaluation means (CV-VAL) determines that at least one counter value has a value of CV=1 and at least one counter value has a value of CV>1, said network side transmission resources controller (SCH-RES) assigns (ST83") a new number of time slots NNTS in accordance with the following relationship:

$$NNTS = NTS - NO(CV=1)$$

where NNTS is the new number of time slots for the next uplink frame, NTS is the multislot capability of the subscriber terminal and NO(CV=1) designates the number of counter values having a value of CV=1.

**7.** A network controller according to claim 2 or 3,
***characterized in that***
when said CV evaluation means (CV-VAL) determines that all presently received counter values have a value of CV=1, said network side transmission resources controller (SCH-RES) assigns (ST84) a minimum number of time slots.

**8.** A network controller according to claim 6,
***characterized in that***
said minimum number of time slots (TS) is one time slot (1TS) when the arrival rate of data packets into the transmitter buffer queue is higher or equal than the removal frequency of data packets from said transmitter buffer queue.

**9.** A network controller according to claim 1,
**characterized by**
an arrival rate estimator (AR-EST) for estimating the arrival rate (AR) of data packets into the transmitter queue (TR-QUE) on the subscriber terminal side (MS) on the basis of the received counter values (CV) received within a measurement time interval (T).

**10.** A network controller according to claim 9,
**characterized in that**
the transmission resources (TS) are further assigned on the basis of the **estimated** arrival rate (AR).

**11.** A network controller according to claim 10 and 7,
***characterized in that***

said minimum number of time slots (TS) is adjusted on the basis of the estimated arrival rate (AR).

**12.** A communication system (SYS) for controlling packet data transfer on a connection (UL, DL) between a subscriber terminal (SS) side and a network side (NS), wherein during a data packet transfer a physical connection (TBF) is maintained which indicates in the subscriber terminal (SS) and the network side (NS) that the subscriber terminal (SS) and the network side (NS) are valid for performing said packet data transfer, comprising:

on said subscriber terminal side (SS) :

a subscriber terminal side transmitter buffer (TBUF) for buffering data packets to be transmitted to the network side (NS) as transmitter queue (TR-QUE);

a subscriber terminal side transmitter queue length information setting means (CV-SET) for determining a transmitter queue (TR-QUE) length information (CV) in accordance with the length of said transmitter queue (TR-QUE); and

a subscriber terminal side transmitter (SS-TR) for transmitting in association with each data packet (DPn) from said transmitter queue (TR-QUE) said length information (CV) to the network side (NS); and

on said network side (NS):

a network side receiver (NS-RC) for receiving said transmitter queue (TR-QUE) length information (CV) transmitted from a subscriber terminal (SS); and

a network side transmission resources controller (SCH-RES) for assigning to a subscriber terminal (SS) transmission resources (TS) for the data packet transfer on the uplink connection (UL) on the basis of said received length information (CV) such that during an active data packet arrival period in which data packets arrive in said transmitter buffer queue at least one data packet (DP) remains in the subscriber terminal side transmitter buffer queue (TR-QUE).

**13.** A system according to claim 12,
***characterized in that***
said length information setting means (CV-SET) is adapted to determine the number of remaining data packets (DP) of the transmitter queue (TR-QUE) and to set said transmitter queue (TR-QUE) length information (CV) in accordance with the determined number of data packets (DP) .

**14.** A system according to claim 12,
***characterized in that***
said length information (CV) is contained in the transmitted data packet (DP).

**15.** A system according to claim 13,
***characterized in that***
said subscriber terminal side transmitter queue length information setting means (CV-SET) is adapted to set as said length information (CV) a counter value (CV) determined in accordance with the following expression:

$$CV = \text{round up } [(TBC-1)/NTS]$$

where:

CV: counter value transmitted to the network side;
TBC: total number of data packets (DP) present in the transmitter buffer (TR-BUF); and
NTS: transmission resources (TS) defined as the number of time slots (multislot capability NTS) in a single frame used for the data packet (DP) transfer on the uplink connection (UL).

**16.** A system according to claim 12,
***characterized by***
a network side physical connection controller (LC-CTRL) including a physical connection maintaining device (LC-MAIN) adapted to maintain said physical connection (LC) when the received transmitter queue (TR-QUE) length information (CV) indicates (CV>0) a non-empty transmitter queue (TR-QUE) and a physical connection terminating device (LC-TERM) adapted to terminate said physical connection (LC) when the determined transmitter queue (TR-QUE) information (CV) indicates (CV=0) an empty transmitter queue (TR-QUE).

**17.** A system according to claim 12,
***characterized in that***
said received length information (CV) is a counter value whose value CV corresponds to the length of the transmitter buffer queue (TR-QUE), said transmission resources are time slots on a TDMA uplink frame, said network side receiver (NS-RC) is adapted to receive one or more data packets and their associated counter values CV on the time slots said uplink frame, a CV evaluation means (CV-VAL) is provided to determine (ST82, ST82', ST82") the value of each received counter value, and said network side transmission resources controller (SCH-RES) is adapted to assign as said network resources a predetermined number of time slots for the uplink frame.

**18.** A system according to claim 16,
***characterized in that***
said physical connection terminating device (LC-TERM) terminates (ST83) said physical connection (LC) when said CV evaluation means (CV-VAL) determines that at least one of said counter values has a value of CV=0.

**19.** A system according to claim 12 or 17,
***characterized in that***
said network side transmission resources controller (SCH-RES) assigns (ST83') the maximum admissible number of time slots (TS) when said CV evaluation means (CV-VAL) determines that all presently received counter values have a value of CV>1.

**20.** A system according to claim 12 or 17,
***characterized in that***
when said CV evaluation means (CV-VAL) determines that at least one counter value has a value of CV=1 and at least one counter value has a value of CV>1, said network side transmission resources controller (SCH-RES) assigns (ST83") a new number of time slots NNTS in accordance with the following relationship:

$$NNTS = NTS - NO(CV=1)$$

where NNTS is the new number of time slots for the next uplink frame, NTS is the multislot capability of the subscriber terminal and NO(CV=1) designates the number of counter values having a value of CV=1.

**21.** A system according to claim 12 or 17,
***characterized in that***
when said CV evaluation means (CV-VAL) determines that all presently received counter values have a value of CV=1 said network side transmission resources controller (SCH-RES) assigns (ST84) a minimum number of time slots.

**22.** A system according to claim 21,
***characterized in that***
said minimum number of time slots (TS) is one time slot (1TS) when the arrival rate of data packets into the transmitter buffer queue is higher or equal than the removal frequency of data packets from said transmitter buffer queue.

**23.** A system according to claim 12,
**characterized by**
said network side transmission resources controller (SCH-RES) comprising an arrival rate estimator (AR-EST) for estimating the arrival rate (AR) of data packets into the transmitter queue (TR-QUE) on the subscriber terminal side (MS) on the basis of the received counter values (CV) received within a measurement time interval (T).

**24.** A system according to claim 23,
**characterized in that**
said transmission resources controller (SCH-RE) assigns the transmission resources on the basis of the estimated arrival rate (AR).

**25.** A system according to claim 24 and 21,
***characterized in that***
said minimum number of time slots (TS) is adjusted on the basis of the estimated arrival rate (AR).

**26.** A method in a communication system (SYS) for performing packet data transfer on a connection (UL, DL) between a subscriber terminal (SS) side and a network side (NS) wherein during a data packet transfer a physical connection (TBF) is maintained which indicates in the subscriber terminal (SS) and the network side (NS) that the subscriber terminal (SS) and the network side (NS) are valid for performing said packet data transfer, comprising the following steps:

receiving (ST73) transmitter queue (TR-QUE) length information (CV) transmitted from said subscriber terminal (SS), said length information (CV) indicating the length of said transmitter queue (TR-QUE) in a transmission buffer (TR-BUF) in said subscriber terminal (SS); and

assigning to said subscriber terminal (SS) transmission resources (TS) for the data packet transfer on the uplink connection (UL) on the basis of said received length information (CV) such that during an active data packet arrival period in which data packets arrive in said transmitter buffer queue at least one data packet (DP) remains in the subscriber terminal side transmitter buffer queue (BUF-QUE).

**27.** A method according to claim 26,
***characterized by***
determining the number of data packets (DP) of the transmitter queue (TR-QUE) and setting said transmitter queue (TR-QUE) length information (CV) in accordance with the determined number of data packets (DP).

**28.** A method according to claim 26 or 27,
***characterized by***
maintaining said physical connection (LC) when the received transmitter queue (TR-QUE) length information (CV) indicates (CV>0) a non-empty transmitter queue (TR-QUE) and terminating said physical connection (LC) when the determined transmitter queue (TR-QUE) information (CV) indicates (CV=0) an empty transmitter queue (TR-QUE).

**29.** A method according to claim 27,
***characterized in that***
determining on the subscriber terminal side (SS) said received length information (CV) as a counter value whose value CV corresponds to the length of the transmitter buffer queue (TR-QUE), assigning as said transmission resources time slots on a TDMA uplink frame, receiving on the network side one or more data packets and their associated counter values CV on said time slots of said uplink frame, determining (ST82, ST82', ST82") the value of each received counter value on the network side, and assigning as said network resources a predetermined number of time slots for the uplink frame.

**30.** A method according to claim 27,
***characterized by***
setting as said length information (CV) a counter value (CV) determined in accordance with the following expression:

$$CV = \text{round up } [(TBC-1)/NTS]$$

where:

CV: count value transmitted to the network side;
TBC: total number of data packets (DP) present in the transmitter buffer (TR-BUF); and
NTS: transmission resources (TS) defined as the number of time slots (multislot capability NTS) in a single frame used for the data packet (DP) transfer on the uplink connection (UL).

**31.** A method according to claim 26 or 30,

***characterized by***
including said length information (CV) in the transmitted data packet (DP).

**32.** A method according to claim 28,
***characterized in that***
terminating (ST83) said physical connection (LC) when it is determined that at least one of said counter values has a value of CV=0.

**33.** A method according to claim 27 or 29,
***characterized in that***
assigning (ST83') the maximum admissible number of time slots (TS) when it is determined that all presently received counter values have a value of CV>1.

**34.** A method according to claim 27 or 29,
***characterized in that***
when it is determined that at least one counter value has a value of CV=1 and at least one counter value has a value of CV>1, assigning (ST83'') a new number of time slots NNTS in accordance with the following relationship:

$$NNTS = NTS - NO(CV=1)$$

where NNTS is the new number of time slots for the next uplink frame, NTS is the multislot capability of the subscriber terminal and NO(CV=1) designates the number of counter values having a value of CV=1.

**35.** A method according to claim 27 or 29,
***characterized in that***
when it is determined that all presently received counter values have a value of CV=1 a minimum number of time slots is assigned (ST84).

**36.** A method according to claim 35,
***characterized in that***
said minimum number of time slots (TS) is one time slot (1TS) when the arrival rate of data packets into the transmitter buffer queue is higher or equal than the removal frequency of data packets from said transmitter buffer queue.

**37.** A method according to claim 26,
**characterized by**
the following steps:

- estimating, at the start of a measurement time interval (T) on the network side (NS), an initial number of available packets (Pan) in the transmitter queue on the basis of a received counter value (CV);

- determining the number (NATS) of received data packets within said measurement time interval (T);

- estimating, at the end of the measurement time interval (T), the final number (Pen) of available data packets in the transmitter queue on the basis of another counter value (CV) received at the end of the measurement time interval (T); and

- estimating the arrival rate (AR) of data packets into the transmitter queue on the basis of the initial number (Pan) of packets, the number (NATS) of received data packets in the measurement time interval (T), the final number (Pen) of data packets and the measurement time interval (T).

**38.** A method according to claim 37,
**characterized in that**
the transmission resources (TS) are further assigned on the basis of the determined arrival rate (AR).

**39.** A method according to claim 38 and 35,
***characterized in that***

said minimum number of time slots (TS) is adjusted on the basis of the estimated arrival rate (AR).

*FIG.1* PRIOR ART
GPRS NETWORK ARCHITECTURE

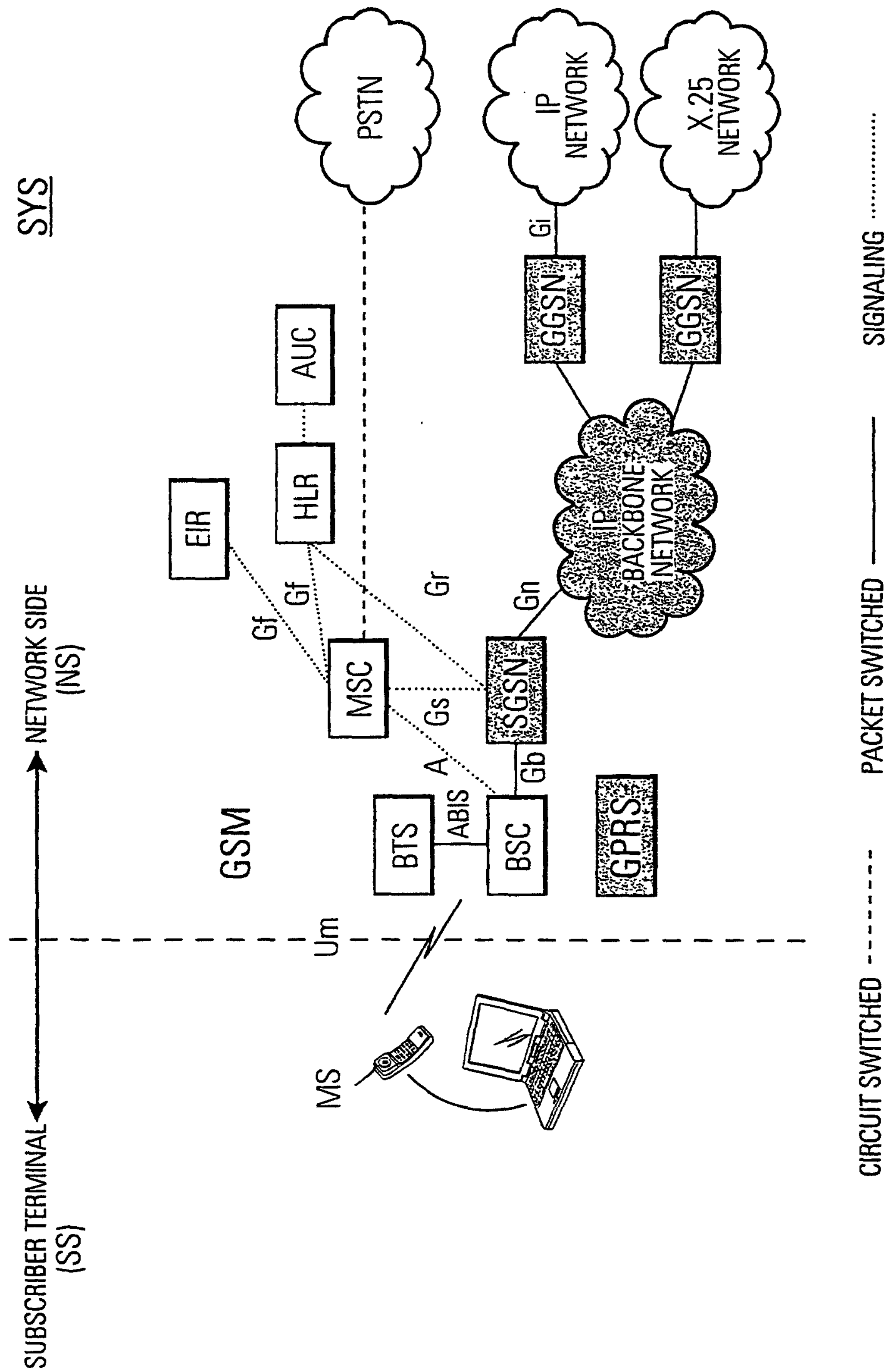

*FIG.2* PRIOR ART
GPRS PROTOCOL STRUCTURE

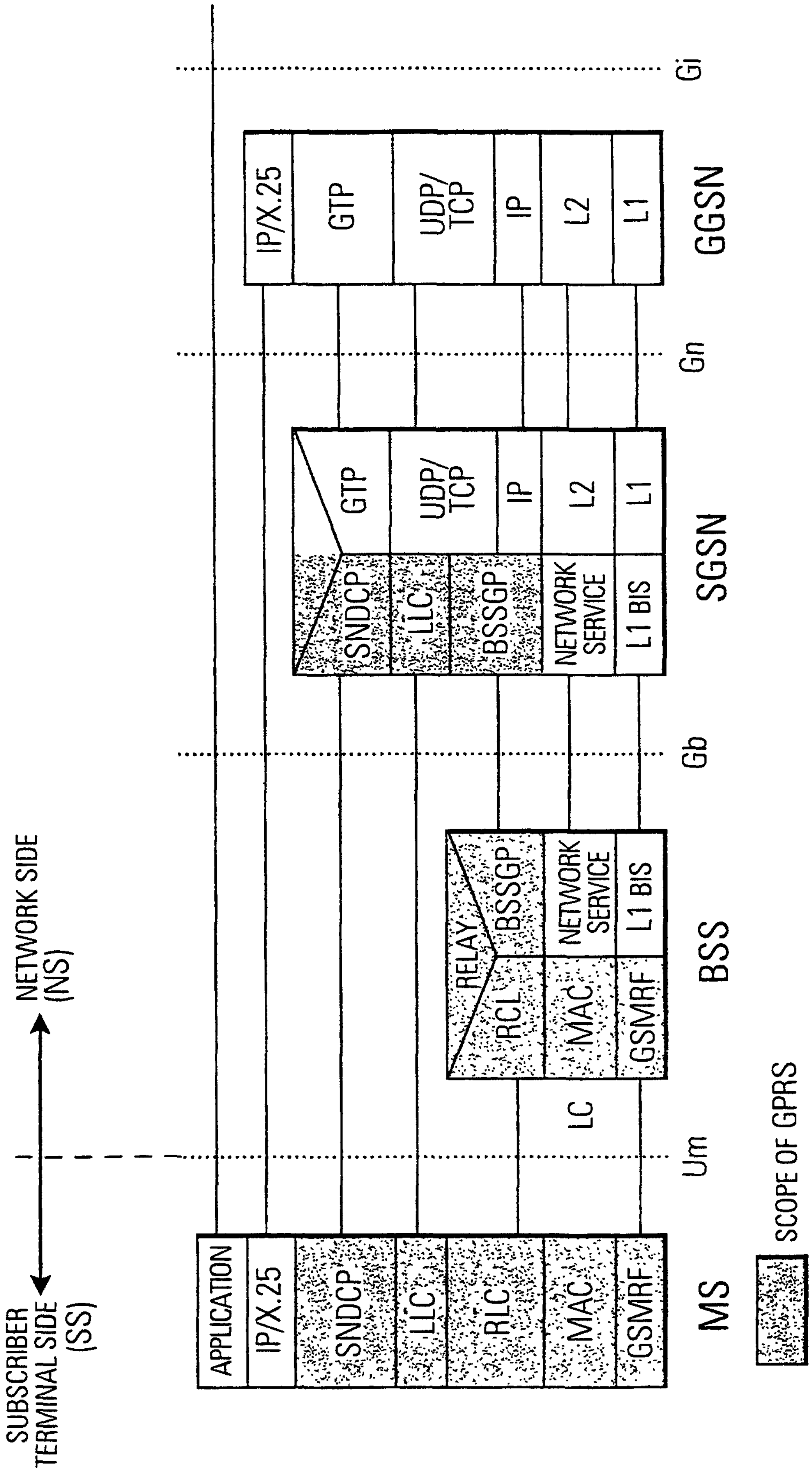

*FIG.4a* PRIOR ART

SCHEMATIC EXAMPLE OF TBF HANDLING PROBLEM

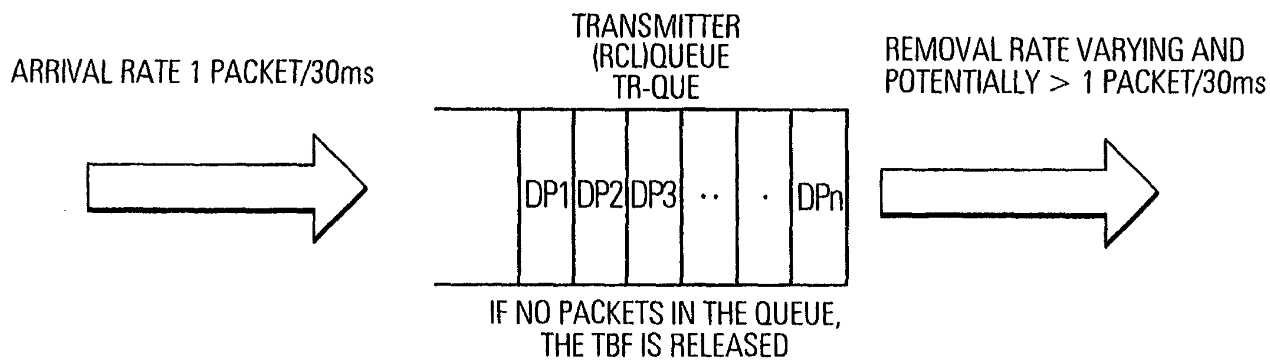


*FIG.3* PRIOR ART

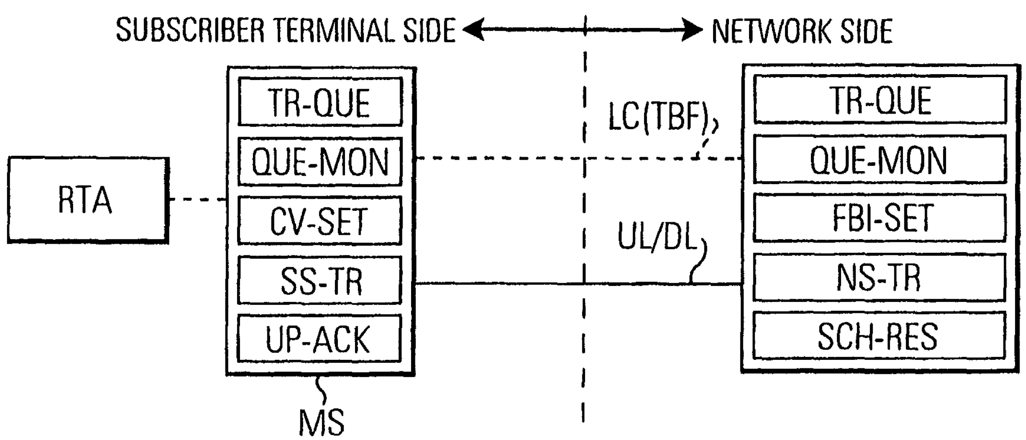

***FIG.4b*** RPIOR ART

G.723.1 TYPICAL TRAFFIC SHAPE

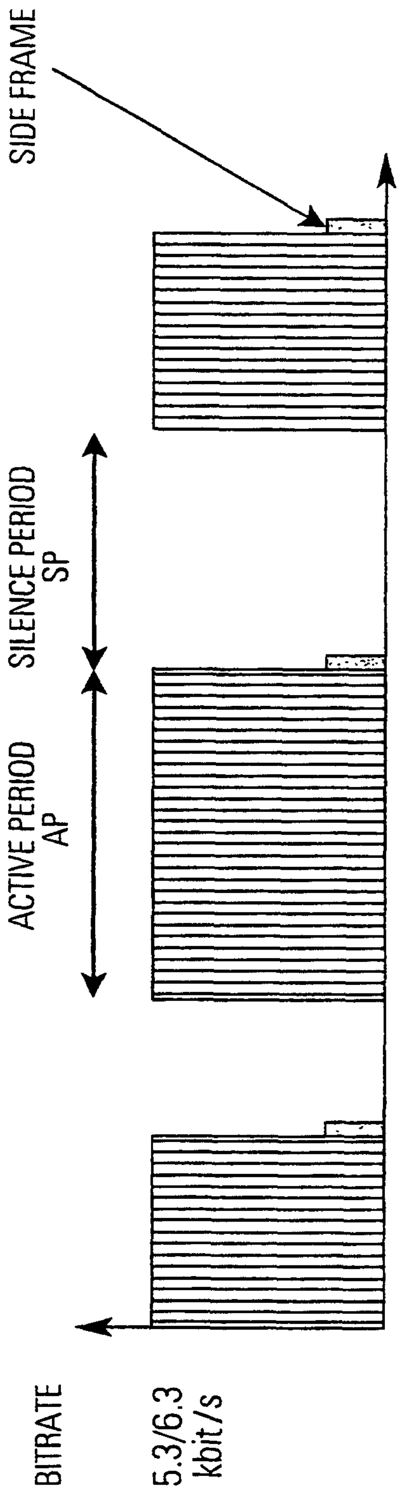

*FIG.4c* PRIOR ART

NORMAL RESOURCE ASSIGNMENT RESULTING INTO UNNECESSARY TBF RELEASE

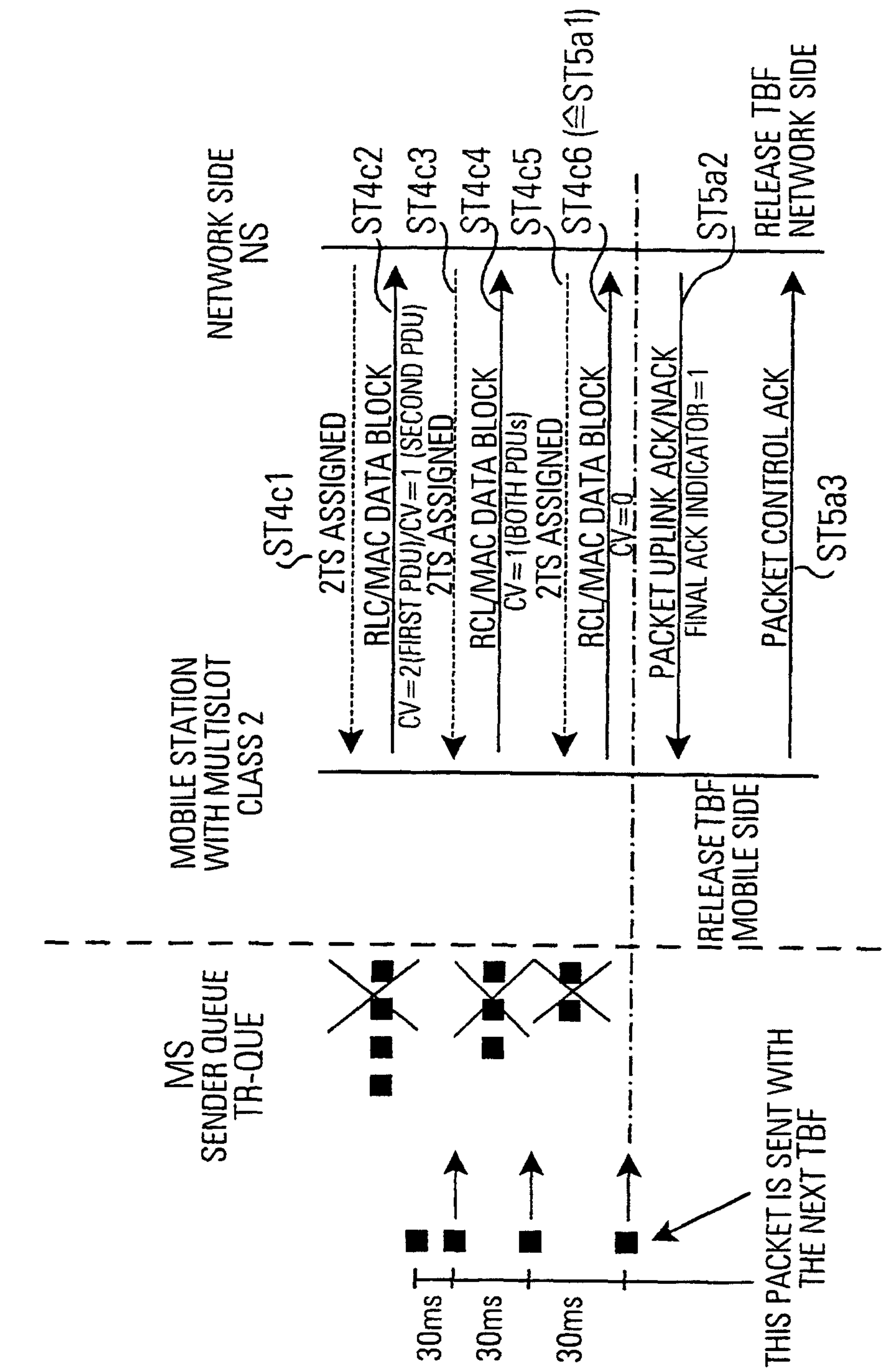

*FIG.5* PRIOR ART
RELEASE OF AN UPLINK TBF

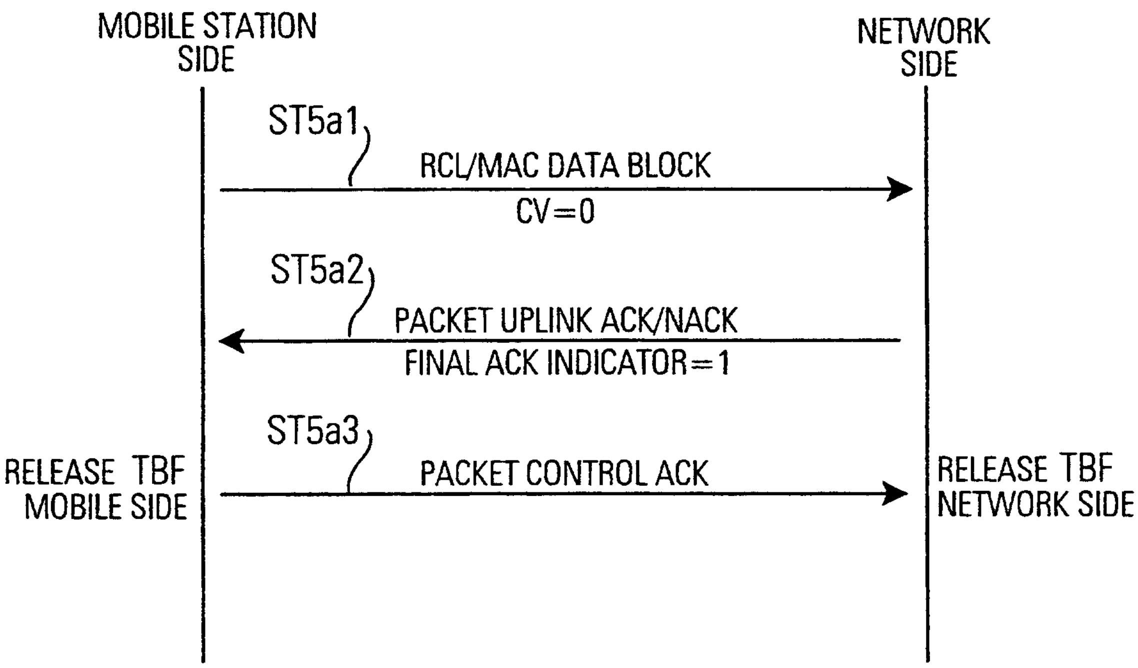

**FIG.6**

PRINCIPLE OF THE INVENTION

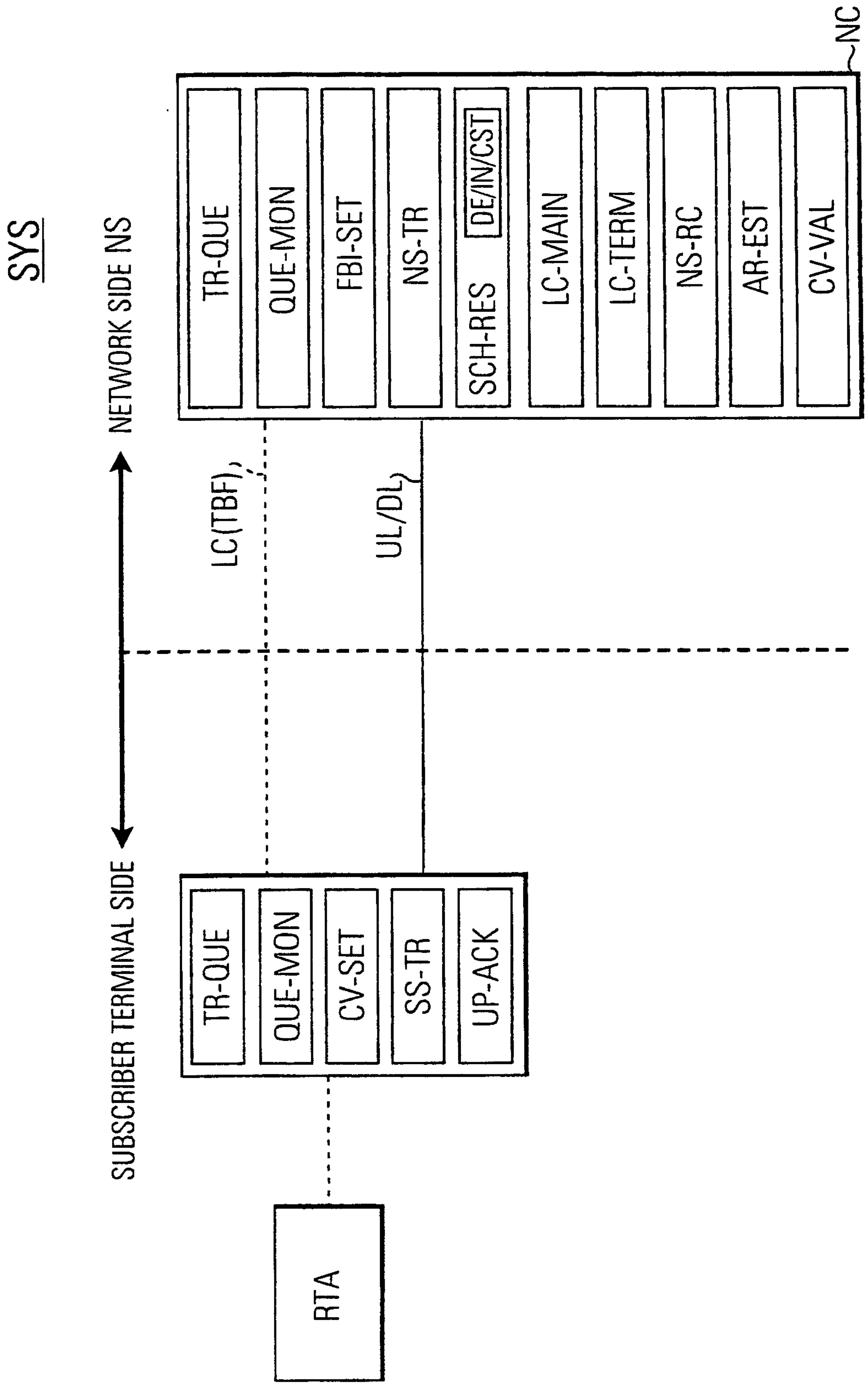

*FIG. 7*

PRINCIPLE OF THE INVENTION

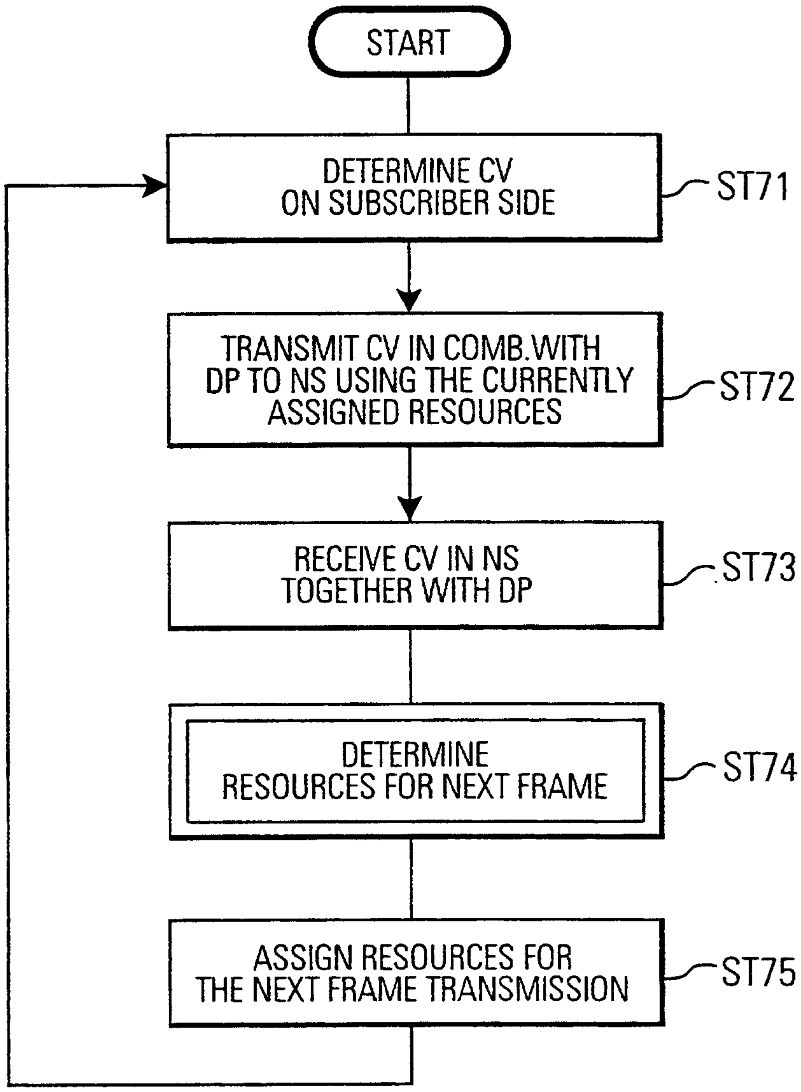

# FIG.8

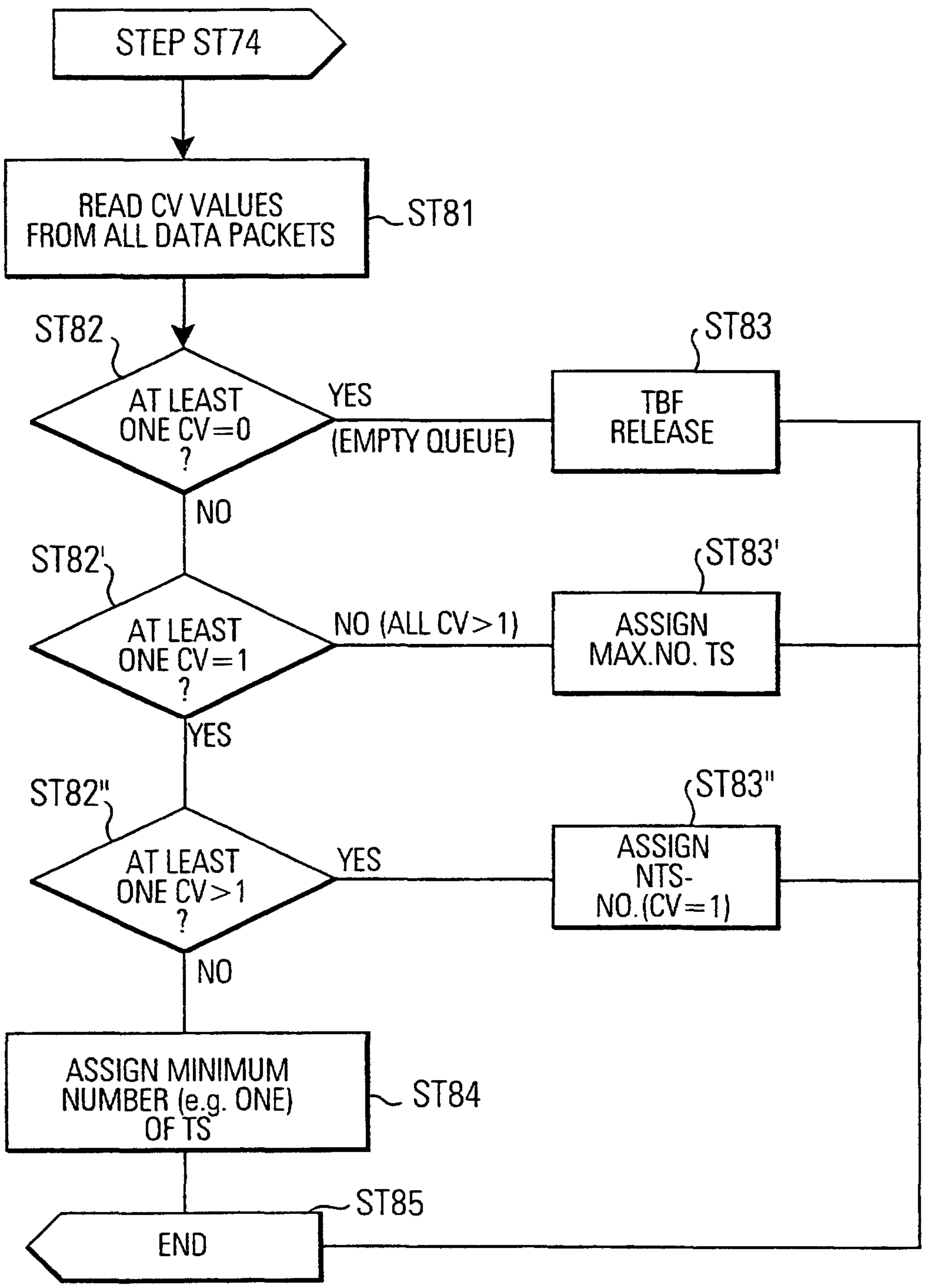
STEP ST74
READ CV VALUES FROM ALL DATA PACKETS
ST81
ST82
AT LEAST ONE CV=0 ?
YES
(EMPTY QUEUE)
ST83
TBF RELEASE
NO
ST82'
AT LEAST ONE CV=1 ?
NO (ALL CV>1)
ST83'
ASSIGN MAX.NO. TS
YES
ST82"
AT LEAST ONE CV>1 ?
YES
ST83"
ASSIGN NTS-NO.(CV=1)
NO
ASSIGN MINIMUM NUMBER (e.g. ONE) OF TS
ST84
ST85
END

# FIG. 9

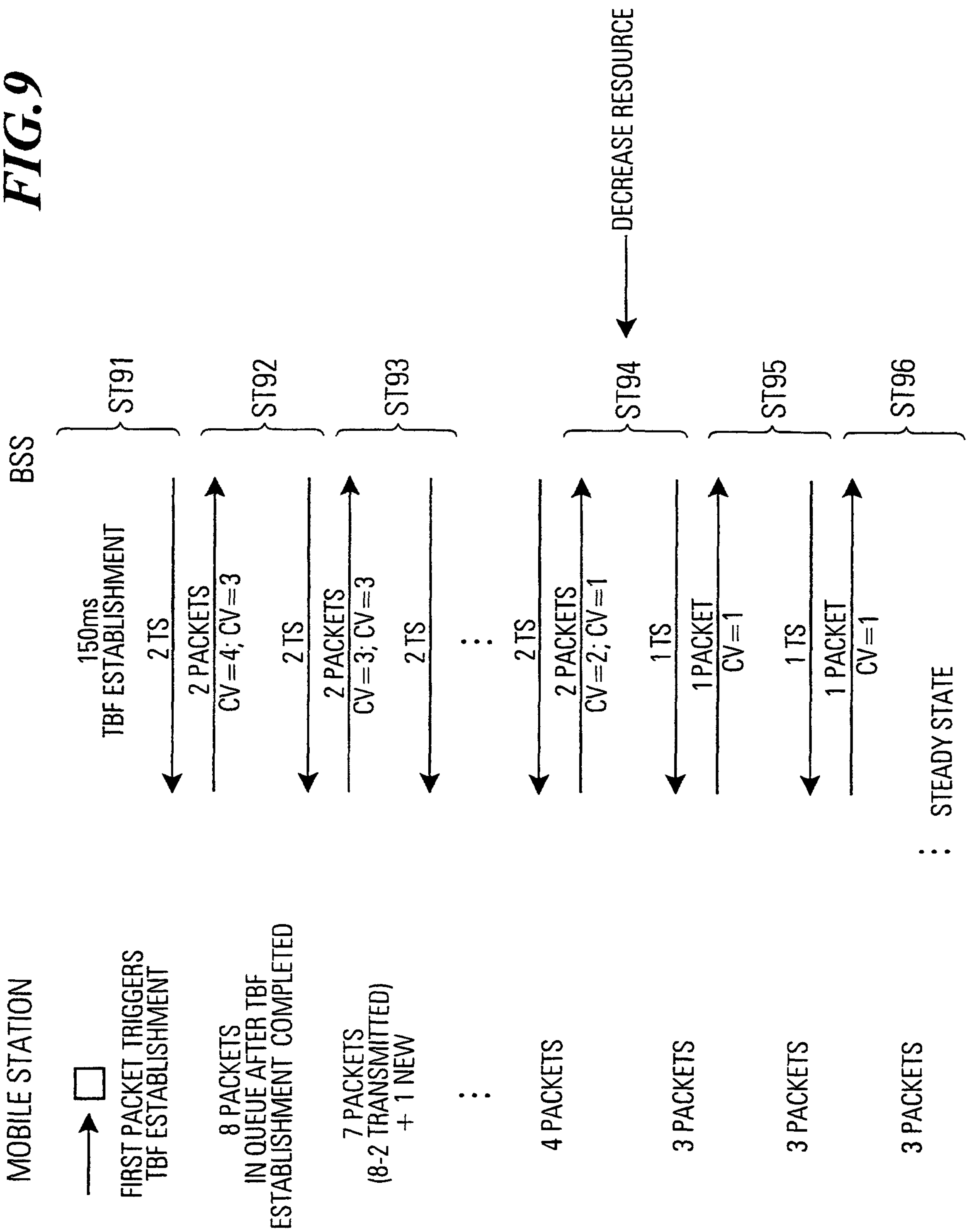
MOBILE STATION
BSS
FIRST PACKET TRIGGERS TBF ESTABLISHMENT
150ms TBF ESTABLISHMENT
2 TS
ST91
8 PACKETS IN QUEUE AFTER TBF ESTABLISHMENT COMPLETED
2 PACKETS CV=4; CV=3
2 TS
ST92
7 PACKETS (8-2 TRANSMITTED) + 1 NEW
2 PACKETS CV=3; CV=3
2 TS
ST93
...
...
4 PACKETS
2 TS
2 PACKETS CV=2; CV=1
ST94
DECREASE RESOURCE
3 PACKETS
1 TS
1 PACKET CV=1
ST95
3 PACKETS
1 TS
1 PACKET CV=1
ST96
3 PACKETS
... STEADY STATE

*FIG.10*

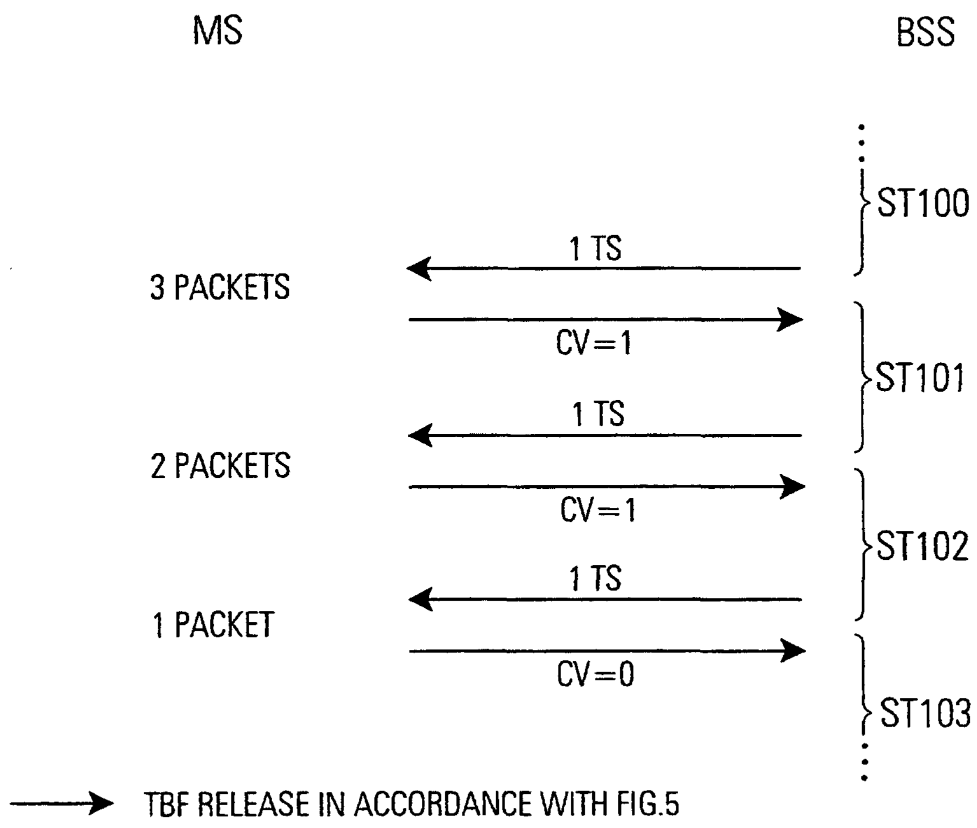
MS
BSS
ST100
1 TS
3 PACKETS
CV=1
ST101
1 TS
2 PACKETS
CV=1
ST102
1 TS
1 PACKET
CV=0
ST103
TBF RELEASE IN ACCORDANCE WITH FIG.5

FIG.11

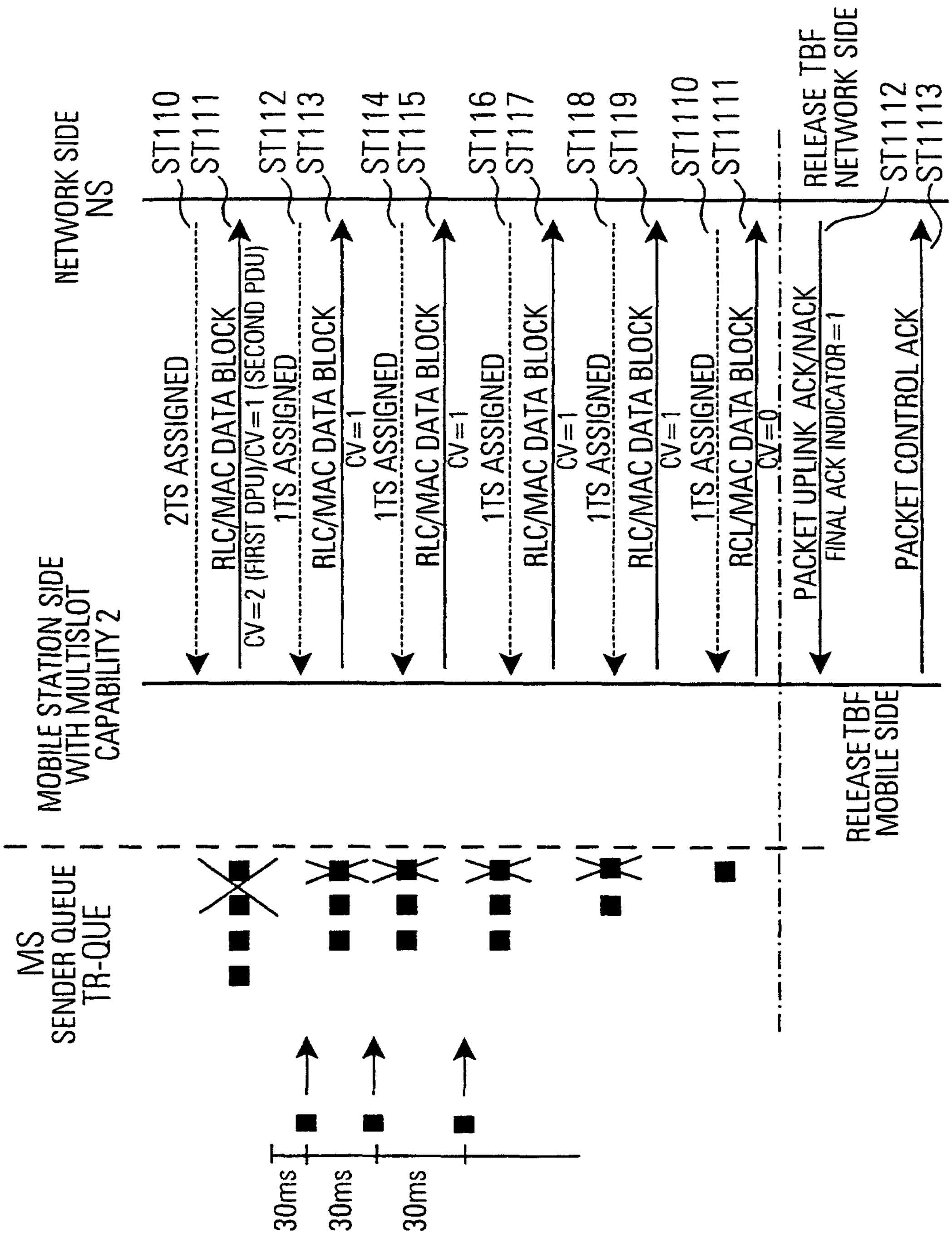
MS
SENDER QUEUE
TR-QUE
MOBILE STATION SIDE
WITH MULTISLOT
CAPABILITY 2
NETWORK SIDE
NS
30ms
30ms
30ms
2TS ASSIGNED
RLC/MAC DATA BLOCK
CV=2 (FIRST DPU)/CV=1 (SECOND PDU)
1TS ASSIGNED
RLC/MAC DATA BLOCK
CV=1
1TS ASSIGNED
RLC/MAC DATA BLOCK
CV=1
1TS ASSIGNED
RLC/MAC DATA BLOCK
CV=1
1TS ASSIGNED
RLC/MAC DATA BLOCK
CV=1
1TS ASSIGNED
RCL/MAC DATA BLOCK
CV=0
PACKET UPLINK ACK/NACK
FINAL ACK INDICATOR=1
PACKET CONTROL ACK
ST110
ST111
ST112
ST113
ST114
ST115
ST116
ST117
ST118
ST119
ST1110
ST1111
RELEASE TBF
NETWORK SIDE
ST1112
ST1113
RELEASE TBF
MOBILE SIDE

FIG.12

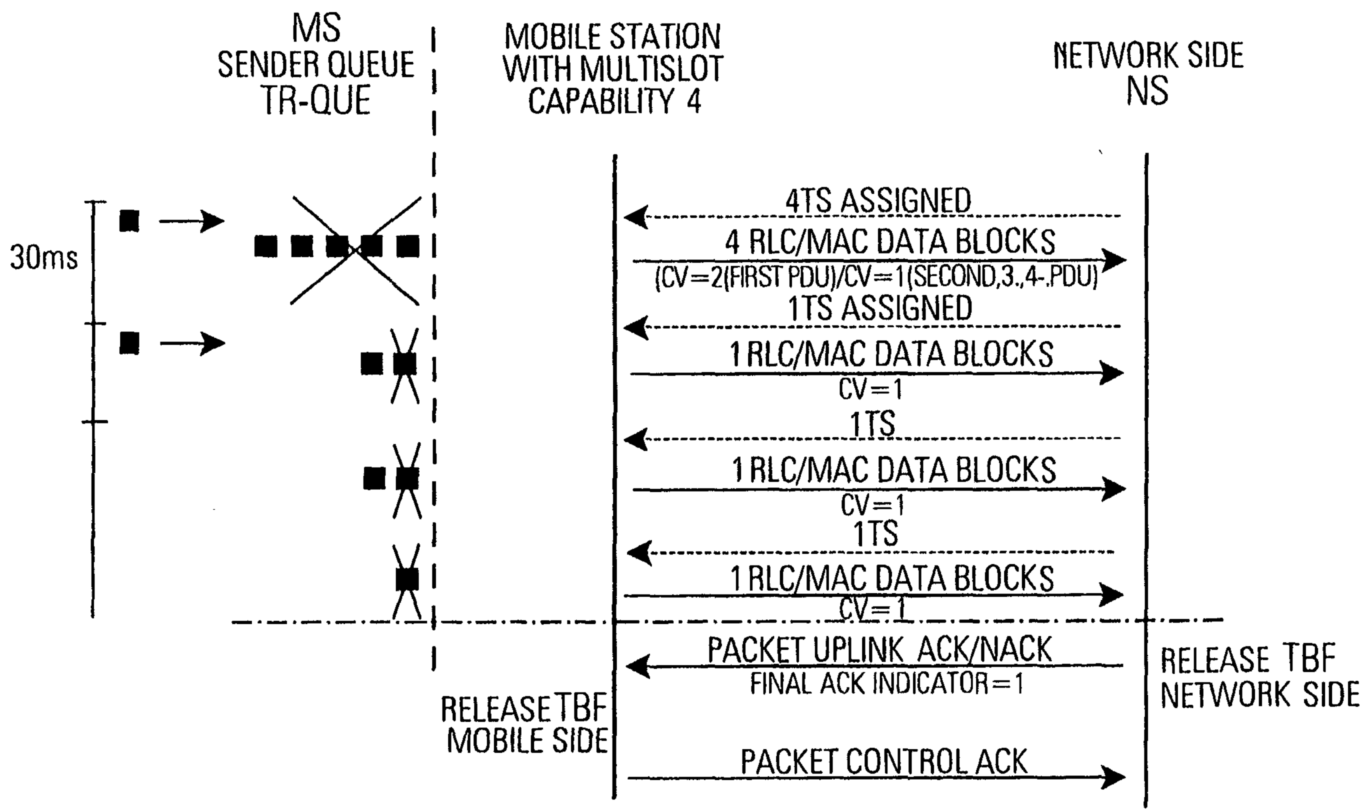
MS
SENDER QUEUE
TR-QUE
MOBILE STATION
WITH MULTISLOT
CAPABILITY 4
NETWORK SIDE
NS
30ms
4TS ASSIGNED
4 RLC/MAC DATA BLOCKS
(CV=2(FIRST PDU)/CV=1(SECOND,3.,4-.PDU)
1TS ASSIGNED
1 RLC/MAC DATA BLOCKS
CV=1
1TS
1 RLC/MAC DATA BLOCKS
CV=1
1TS
1 RLC/MAC DATA BLOCKS
CV=1
PACKET UPLINK ACK/NACK
FINAL ACK INDICATOR=1
RELEASE TBF
NETWORK SIDE
RELEASE TBF
MOBILE SIDE
PACKET CONTROL ACK

FIG.13

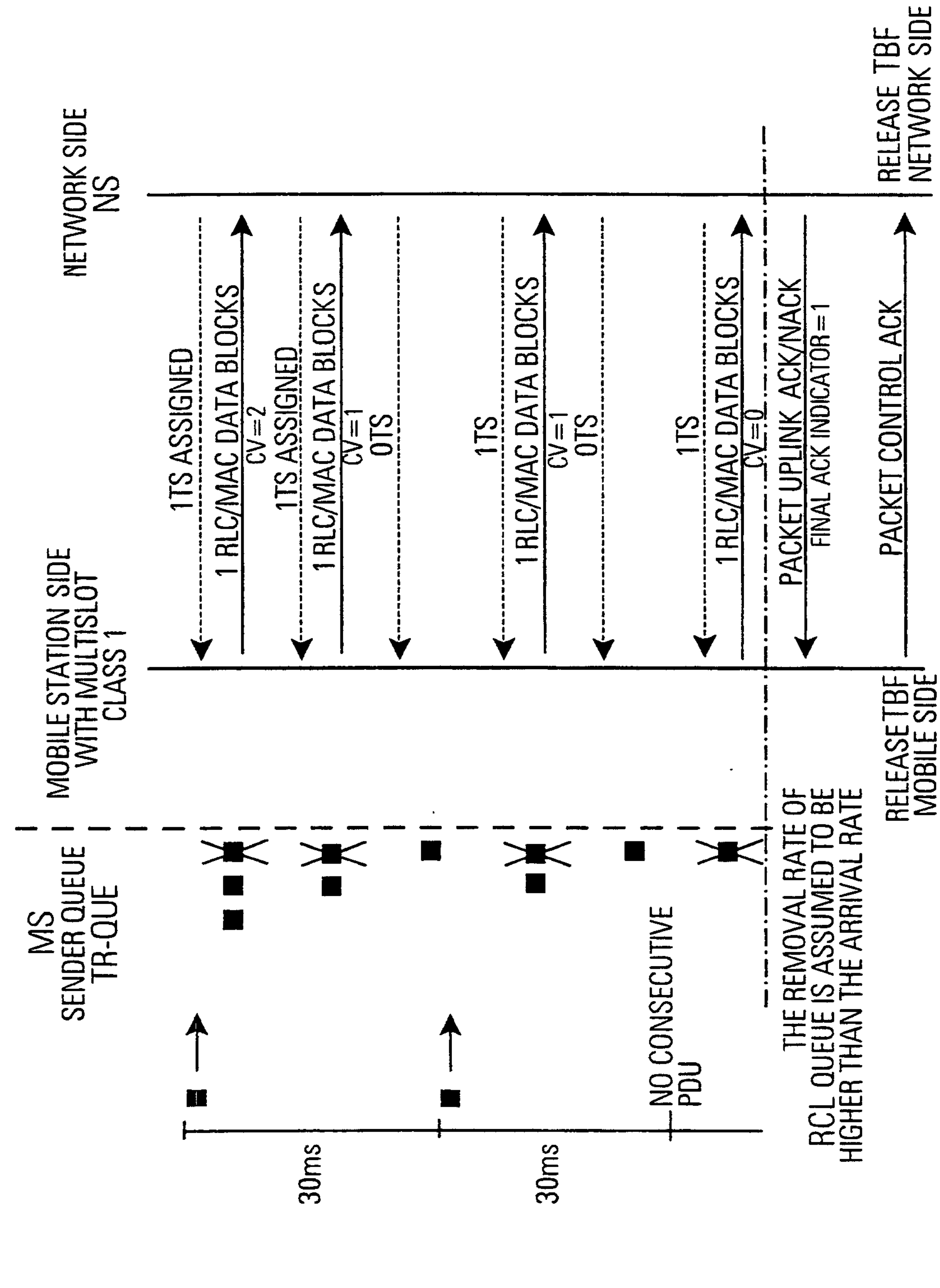
MS
SENDER QUEUE
TR-QUE
MOBILE STATION SIDE
WITH MULTISLOT
CLASS 1
NETWORK SIDE
NS
30ms
30ms
NO CONSECUTIVE
PDU
1TS ASSIGNED
1 RLC/MAC DATA BLOCKS
CV=2
1TS ASSIGNED
1 RLC/MAC DATA BLOCKS
CV=1
0TS
1TS
1 RLC/MAC DATA BLOCKS
CV=1
0TS
1TS
1 RLC/MAC DATA BLOCKS
CV=0
PACKET UPLINK ACK/NACK
FINAL ACK INDICATOR=1
PACKET CONTROL ACK
THE REMOVAL RATE OF
RCL QUEUE IS ASSUMED TO BE
HIGHER THAN THE ARRIVAL RATE
RELEASE TBF
MOBILE SIDE
RELEASE TBF
NETWORK SIDE

*FIG.14a*

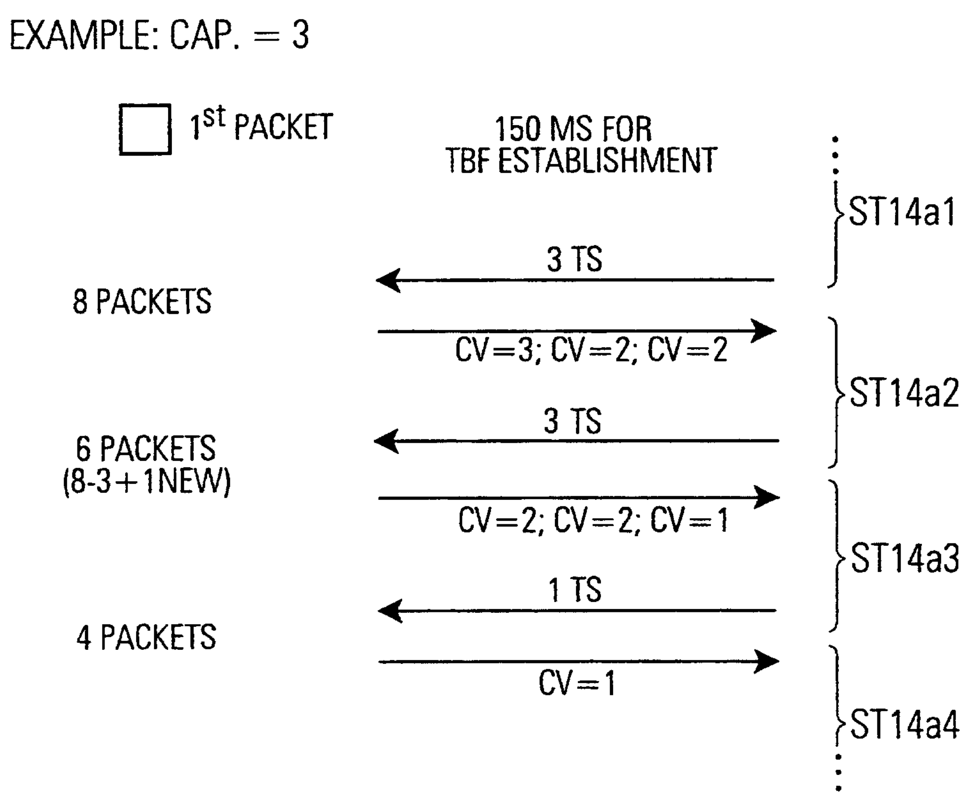
EXAMPLE: CAP. = 3
1st PACKET
150 MS FOR
TBF ESTABLISHMENT
ST14a1
3 TS
8 PACKETS
CV=3; CV=2; CV=2
ST14a2
3 TS
6 PACKETS
(8-3+1NEW)
CV=2; CV=2; CV=1
ST14a3
1 TS
4 PACKETS
CV=1
ST14a4

FIG.14b

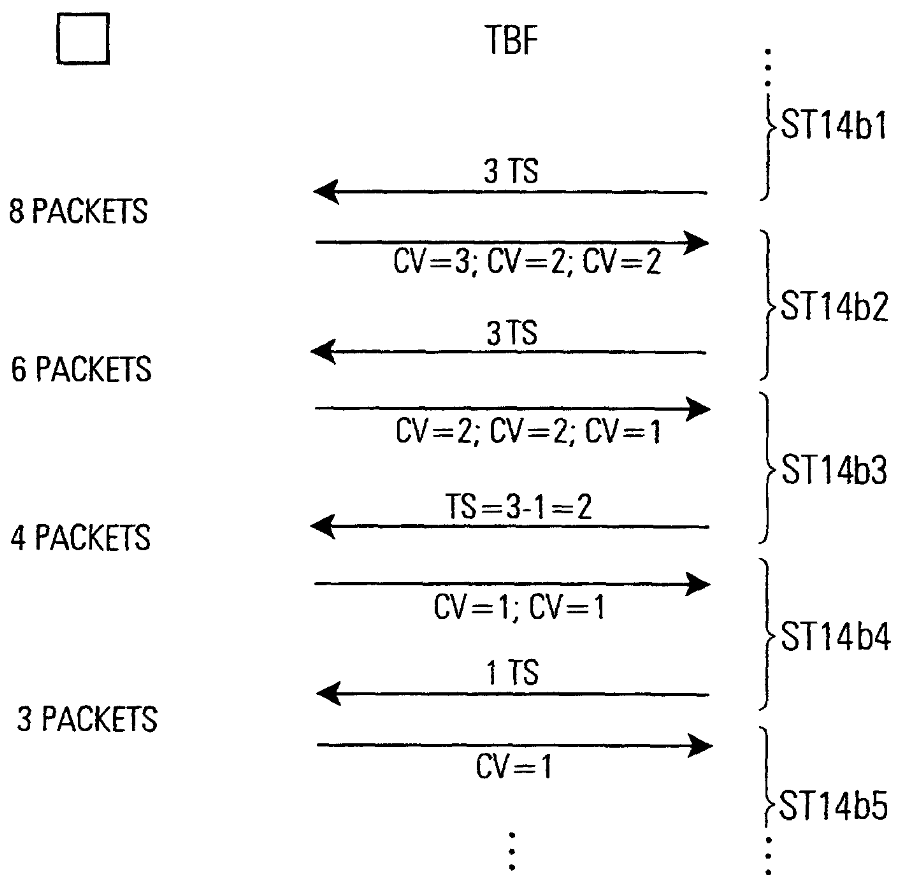
TBF
ST14b1
3 TS
8 PACKETS
CV=3; CV=2; CV=2
ST14b2
3 TS
6 PACKETS
CV=2; CV=2; CV=1
ST14b3
TS=3-1=2
4 PACKETS
CV=1; CV=1
ST14b4
1 TS
3 PACKETS
CV=1
ST14b5

# FIG.15

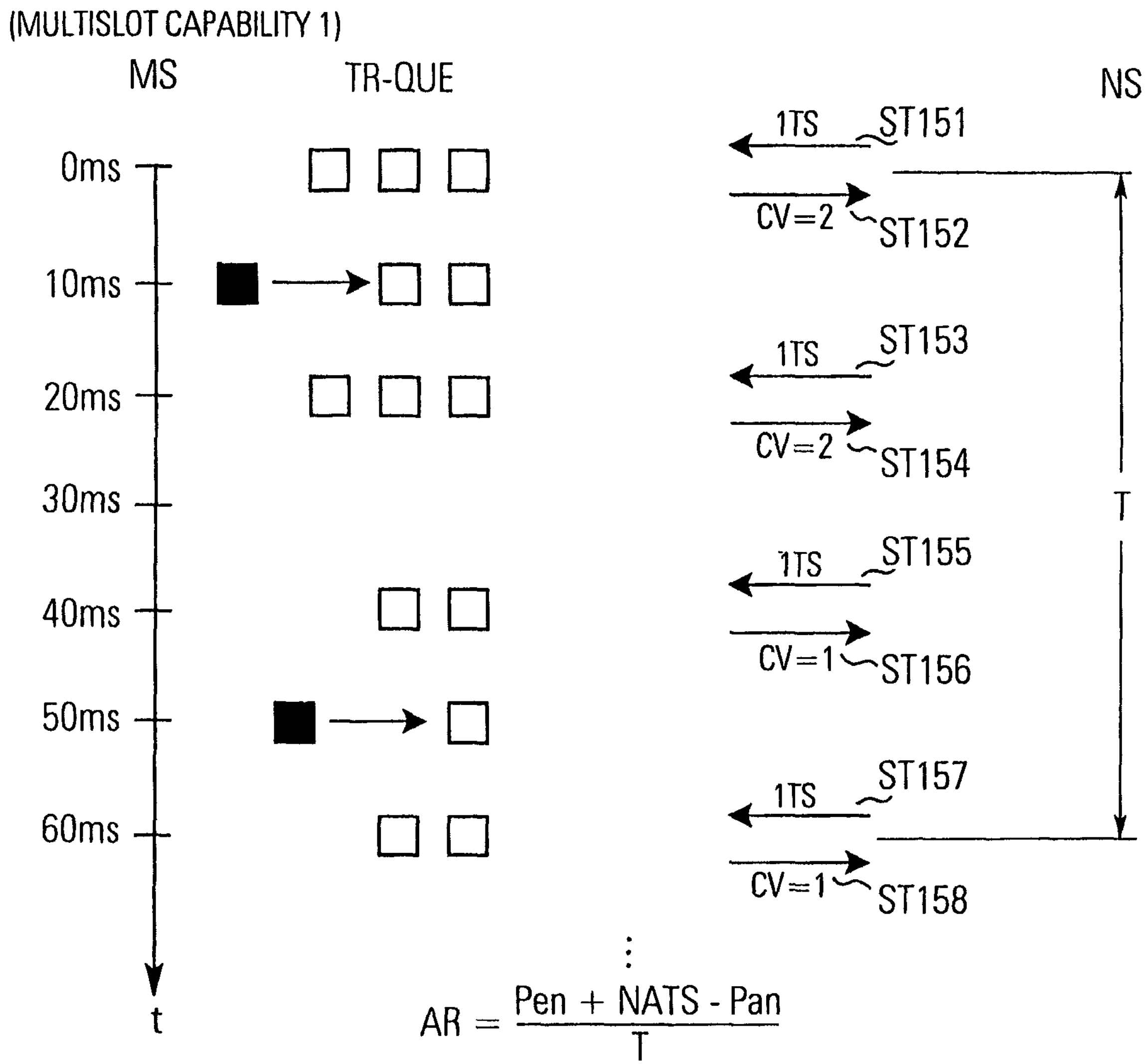


$$AR = \frac{Pen + NATS - Pan}{T}$$

T: (MEASUREMENT TIME) = 60ms
Pan: (STARTING VALUE): CV=2
Pen: (END VALUE): CV=1
NATS: (NUMBER OF ASSIGNED TIME SLOTS) TS=3 (≙NUMBER OF TRANSMITTED PACKETS)

European Patent Office

# EUROPEAN SEARCH REPORT

Application Number
EP 00 10 6924

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 35876 A (NOKIA TELECOMMUNICATIONS OY ;ENGDAHL TOMI (FI)) 15 July 1999 (1999-07-15) * page 2, line 16 - page 3, line 17 * * page 9, line 16 - page 12, line 33 * | 1,12,26 | H04L12/28 H04L12/56 |
| Y | | 2,9,10, 13,14, 23,24, 27,28,31 | |
| Y | EP 0 917 317 A (LUCENT TECHNOLOGIES INC) 19 May 1999 (1999-05-19) * page 8, line 38 - line 56 * * page 12, line 37 - line 42 * * page 14, line 17 - line 53 * * page 18, line 6 - line 15 * | 2,13,14, 27,28,31 | |
| A | | 3-7,11, 15-17, 19-21, 29,30, 32-35,37 | TECHNICAL FIELDS SEARCHED (Int.Cl.7) |
| Y | US 5 006 983 A (WAYNE KENNETH P ET AL) 9 April 1991 (1991-04-09) * column 1, line 5 - column 2, line 42 * * column 19, line 22 - column 21, line 19 * | 9,10,23, 24 | H04L H04Q G06F |

The present search report has been drawn up for all claims

| Place of search | Date of completion of the search | Examiner |
|---|---|---|
| THE HAGUE | 1 September 2000 | Brichau, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 00 10 6924

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2000

| Patent document cited in search report | Publication date | Patent family member(s) | Publication date |
|---|---|---|---|
| WO 9935876 A | 15-07-1999 | AU 6206898 A | 26-07-1999 |
| EP 0917317 A | 19-05-1999 | CA 2249818 A | 14-04-1999 |
| | | CA 2249819 A | 14-04-1999 |
| | | CA 2249840 A | 14-04-1999 |
| | | CA 2249864 A | 14-04-1999 |
| | | CA 2249865 A | 14-04-1999 |
| | | CA 2249866 A | 14-04-1999 |
| | | CA 2249868 A | 14-04-1999 |
| | | EP 0912015 A | 28-04-1999 |
| | | EP 0917316 A | 19-05-1999 |
| | | EP 0912016 A | 28-04-1999 |
| | | EP 0915592 A | 12-05-1999 |
| | | EP 0913968 A | 06-05-1999 |
| | | EP 0910176 A | 21-04-1999 |
| | | JP 11298532 A | 29-10-1999 |
| | | JP 11261623 A | 24-09-1999 |
| | | JP 11289339 A | 19-10-1999 |
| | | JP 11289340 A | 19-10-1999 |
| | | JP 11298533 A | 29-10-1999 |
| | | JP 11289351 A | 19-10-1999 |
| | | JP 11289341 A | 19-10-1999 |
| US 5006983 A | 09-04-1991 | CA 2066619 A | 13-03-1991 |
| | | WO 9104542 A | 04-04-1991 |

EPO FORM P0459

For more details about this annex : see Official Journal of the European Patent Office, No. 12/82